# EUROPÄISCHE PATENTSCHRIFT

(11) **EP 3 707 411 B1**
(45) Veröffentlichungstag und Bekanntmachung des Hinweises auf die Patenterteilung: **11.01.2023**
(21) Anmeldenummer: 18793369.2
(22) Anmeldetag: 11.10.2018
(51) Int. Cl.: F16H 47/04, B60K 6/365, B60K 6/445, B60K 6/48, B60K 6/543

(54) **STUFENLOSES LEISTUNGSVERZWEIGUNGSGETRIEBE MIT WENIGSTENS VIER FAHRBEREICHEN**
POWER SPLIT CONTINUOUSLY VARIABLE TRANSMISSION WITH AT LEAST FOUR TRAVEL RANGES
TRANSMISSION À VARIATION CONTINUE À DÉRIVATION DE PUISSANCE PRÉSENTANT AU MOINS QUATRE PLAGES DE MARCHE

(30) Priorität: 10.11.2017 DE 102017219999
(43) Veröffentlichungstag der Anmeldung: 16.09.2020
(73) Patentinhaber: ZF Friedrichshafen AG, 88046 Friedrichshafen (DE)
(72) Erfinder: RECHENBACH, Philipp, 88677 Markdorf (DE); REICK, Benedikt, 6842 Koblach (AT)
(74) Vertreter: ZF Friedrichshafen AG
(86) Internationale Anmeldenummer: PCT/EP2018/077734
(87) Internationale Veröffentlichungsnummer: WO 2019/091693

(56) Entgegenhaltungen:
- EP-A1- 0 476 794
- DE-A1- 3 342 047
- DE-A1- 3 709 191
- DE-A1- 4 142 545
- DE-A1- 19 522 833
- DE-A1- 19 739 906
- DE-A1-102006 028 789
- DE-T2- 60 106 504
- US-B2- 8 758 181

## Beschreibung

Die Erfindung betrifft ein stufenlos leistungsverzweigtes Getriebe mit wenigstens vier Fahrbereichen gemäß der im Oberbegriff des Patentanspruches 1 näher definierten Art.

Aus der DE 37 09 191 A ist ein gattungsgemäßes Leistungsverzweigungsgetriebe bekannt.

Aus der DE 195 22 833 A1 ist ein stufenloses Leistungsverzweigungsgetriebe mit einem mechanischen Leistungszweig und mit einem hydrostatischen Leistungszweig bekannt. Die Leistungszweige werden über eine gemeinsame Antriebswelle angetrieben und mit einem Koppelgetriebe summiert. Das Koppelgetriebe umfasst mehrere Planetenradsätze und Kupplungen und steht mit einer Abtriebswelle in Verbindung. Dabei ist das Koppelgetriebe auf einer Antriebswelle angeordnet. Einer der Planetenradsätze des Koppelgetriebes ist über Fahrtrichtungskupplungen für Vorwärtsfahrt und Rückwärtsfahrt mit der Abtriebswelle in Wirkverbindung bringbar.

Ein weiterer Planetenradsatz des Koppelgetriebes umfasst drei einfache dreiwellige Planetengetriebe und ist im Bereich von fünf Wellen mit der Getriebeeingangswelle, mit einem Variator des hydrostatischen Leistungszweiges und Schaltelementhälften der Kupplungen verbunden sowie über die Kupplungen mit dem einen Planetenradsatz koppelbar.

Das bekannte Leistungsverzweigungsgetriebe ist jedoch durch einen hohen konstruktiven Aufwand gekennzeichnet. Aufgrund unerwünscht hoher Blindleistungsflüsse im Bereich des Koppelgetriebes treten im Betrieb des Leistungsverzweigungsgetriebes einen Wirkungsgrad des Leistungsverzweigungsgetriebes beeinträchtigende Verlustleistungen auf.

Der vorliegenden Erfindung liegt daher die Aufgabe zugrunde, ein konstruktiv einfaches und mit hohem Wirkungsgrad betreibbares stufenloses Leistungsverzweigungsgetriebe zur Verfügung zu stellen.

Erfindungsgemäß wird diese Aufgabe mit einem stufenlosen Leistungsverzweigungsgetriebe mit den Merkmalen des Patentanspruches 1 gelöst.

Das erfindungsgemäße stufenlose Leistungsverzweigungsgetriebe ist mit wenigstens vier Fahrbereichen ausgeführt, innerhalb welchen die Übersetzung im Bereich eines Variators stufenlos variierbar ist. Ein mehrere Wellen umfassender erster Planetenradsatz ist über mehrere Schaltelemente mit einem mehrere Wellen aufweisenden zweiten Planetenradsatz verbindbar, der mit einer Getriebeausgangswelle in Wirkverbindung steht oder in Wirkverbindung bringbar ist.

Erfindungsgemäß umfasst der erste Planetenradsatz vier Wellen und steht über eine erste Welle mit einer Getriebeeingangswelle und einer ersten Welle des Variators in Wirkverbindung oder ist mit diesen in Wirkverbindung bringbar. Des Weiteren steht der erste Planetenradsatz über eine zweite Welle mit einer zweiten Welle des Variators in Wirkverbindung, während der erste Planetenradsatz über eine dritte Welle mit Schaltelementhälften von zwei Schaltelementen und über eine vierte Welle mit einer Schaltelementhälfte eines weiteren Schaltelementes gekoppelt ist.

Aufgrund der erfindungsgemäßen Anbindung des ersten Planetenradsatzes an die Getriebeeingangswelle, den Variator und die Schaltelemente ist das erfindungsgemäße stufenlose Leistungsverzweigungsgetriebe auf konstruktiv einfache Art und Weise mit einem lediglich vier Wellen aufweisenden ersten Planetenradsatz ausführbar. Der erste Planetenradsatz ist im Vergleich zu der aus dem Stand der Technik bekannten Lösung kosten- und bauraumgünstiger ausführbar und es treten in einem derart ausgeführten ersten Planetenradsatz auch geringe Blindleistungsflüsse auf.

Um die vier Fahrbereiche möglichst bauraum- und kostengünstig darstellen zu können, ist die dritte Welle des ersten Planetenradsatzes bei einer Weiterbildung des erfindungsgemäßen stufenlosen Leistungsverzweigungsgetriebes über das Schaltelement, mit deren Schaltelementhälfte die dritte Welle des ersten Planetenradsatzes gekoppelt ist, mit einer ersten Welle des zweiten Planetenradsatzes verbindbar. Des Weiteren ist die dritte Welle des ersten Planetenradsatzes hierfür über das zweite Schaltelement, mit dessen Schaltelementhälfte die dritte Welle des ersten Planetenradsatzes ebenfalls gekoppelt ist, mit einer zweiten Welle des zweiten Planetenradsatzes in Wirkverbindung bringbar.

Bei einer weiteren kosten- und bauraumgünstigen Ausführungsform des erfindungsgemäßen stufenlosen Leistungsverzweigungsgetriebes ist die vierte Welle des ersten Planetenradsatzes über das weitere Schaltelement mit der ersten Welle des zweiten Planetenradsatzes und einer Schaltelementhälfte eines zusätzlichen Schaltelementes koppelbar. Zudem ist die vierte Welle des ersten Planetenradsatzes über das zusätzliche Schaltelement mit der zweiten Welle oder mit der dritten Welle des zweiten Planetenradsatzes in Wirkverbindung bringbar.

Die vierte Welle des ersten Planetenradsatzes ist bei einer hierzu alternativen und ebenfalls kosten- und bauraumgünstigen Ausführungsform des Leistungsverzweigungsgetriebes über das weitere Schaltelement mit der ersten Welle des zweiten Planetenradsatzes koppelbar, während die zweite Welle des zweiten Planetenradsatzes über ein zusätzliches Schaltelement mit der dritten Welle des zweiten Planetenradsatzes in Wirkverbindung bringbar ist.

Ist die zweite Welle des zweiten Planetenradsatzes über ein Schaltelement drehfest mit einem gehäusefesten Bauteil verbindbar, sind zumindest zwei der vier Fahrbereiche auf konstruktiv einfache Art und Weise bei gleichzeitig geringem Bauraumbedarf und mit hohem Wirkungsgrad darstellbar.

Im Bereich der Getriebeeingangswelle ist bei einer Weiterbildung des erfindungsgemäßen stufenlosen Leistungsverzweigungsgetriebes ein Schaltelement vorgesehen, über das eine mit der Getriebeeingangswelle koppelbare Antriebsmaschine eines mit dem Leistungsverzweigungsgetriebes ausgeführten Fahrzeugantriebsstrangs mit der ersten Welle des ersten Planetenradsatzes in Wirkverbindung bringbar ist oder von dieser entkoppelbar ist. Damit besteht auf konstruktiv einfache Art und Weise die Möglichkeit, antriebsmaschinenseitige Schleppmomente während eines Fahrbetriebes eines mit dem erfindungsgemäßen stufenlosen Leistungsverzweigungsgetriebes ausgeführten Fahrzeuges, während dem die mit der Getriebeeingangswelle in Wirkverbindung bringbare Antriebsmaschine abgeschaltet ist, nicht an der Getriebeeingangswelle anzulegen.

Ist die Getriebeeingangswelle mit einer elektrischen Maschine wirkverbunden, ist ein Teil des an der Getriebeeingangswelle anliegenden Drehmomentes zur Erzeugung von elektrischer Energie verwendbar, wenn die elektrische Maschine generatorisch betreibbar ist. Die über die elektrische Maschine erzeugte elektrische Energie ist beispielsweise für eine Versorgung eines Bordnetzes eines mit dem erfindungsgemäßen stufenlosen Leistungsverzweigungsgetriebe ausgeführten Fahrzeuges, zum Beladen eines elektrischen Speichers und/oder für den Antrieb einer elektrischen Maschine zur Verfügung stellbar. Des Weiteren ist während eines motorischen Betriebes der elektrischen Maschine ein rein elektrischer Fahrantrieb eines mit dem erfindungsgemäßen Leistungsverzweigungsgetriebe ausgebildeten Fahrzeuges darstellbar, während dem alleine von der elektrischen Maschine Drehmoment am Abtrieb und/oder im Bereich einer Zapfwelle zur Verfügung gestellt wird. Des Weiteren besteht auch die Möglichkeit, während eines sogenannten Boost-Betriebes gleichzeitig Drehmoment von der elektrischen Maschine und einer ebenfalls mit der Getriebeeingangswelle koppelbaren Antriebsmaschine, wie einer Brennkraftmaschine, eines Fahrzeugantriebsstranges im Bereich des Abtriebs und/oder einer Zapfwelle anzulegen.

Dabei kann es vorgesehen sein, die elektrische Maschine während des motorischen Betriebes über eine fahrzeugseitige elektrische Speichereinrichtung und/oder über eine externe Stromversorgung, wie ein Stromnetz oder dergleichen mit elektrischer Energie zu versorgen. Hierfür ist ein Fahrzeug beispielsweise mit einer entsprechenden Schnittstelle, wie einer Steckdose und/oder einem Stecker ausführbar, um das Fahrzeug bzw. die elektrische Maschine in gewünschtem Umfang mit dem Stromnetz verbinden zu können.

Dabei besteht die Möglichkeit, den Generator auf konstruktiv einfache Art und Weise bei gleichzeitig geringen Verlusten direkt an die Getriebeeingangswelle anzubinden. Wird die elektrische Maschine über wenigstens eine Stirnradstufe und/oder über wenigstens einen Planetenradsatz an die Getriebeeingangswelle angekoppelt, ist das für den Antrieb des Generators aufzuwendende bzw. zur Verfügung zu stellende Drehmoment geringer als bei einer direkten Anbindung des Generators an die Getriebeeingangswelle. Im Unterschied hierzu sind die Zahnradstufen aufweisenden Kopplungen jedoch durch einen höheren mechanischen Aufwand sowie im Betrieb durch höhere mechanische Verlustleistungen gekennzeichnet. Da elektrische Maschinen bekannterweise bei höheren Drehzahlen effizienter betreibbar sind als in unteren Drehzahlbereichen, ist das erfindungsgemäße Leistungsverzweigungsgetriebe bei entsprechender Auslegung der Übersetzung der wenigstens einen Stirnradstufe bzw. des wenigstens einen Planetengetriebes und der elektrischen Maschine im Vergleich zur direkten Anbindung der elektrischen Maschine an die Getriebeeingangswelle insgesamt mit höherem Wirkungsgrad betreibbar.

Umfasst das erfindungsgemäße stufenlose Leistungsverzweigungsgetriebe zwei in einen Kraftfluss zu- und aus dem Kraftfluss abschaltbare Fahrtrichtungskupplungen und diesen zugeordnete Zahnradpaarungen, ist ein mit dem erfindungsgemäßen Leistungsverzweigungsgetriebe ausgeführtes Fahrzeug sowohl in Vorwärts- als auch in Rückwärtsfahrtrichtung betreibbar. Dabei entspricht eine Drehrichtung der Getriebeausgangswelle bei zugeschalteter erster Fahrtrichtungskupplung der Drehrichtung der Getriebeeingangswelle. Im Unterschied hierzu weicht die Drehrichtung der Getriebeausgangswelle bei zugeschalteter zweiter Fahrtrichtungskupplung von der Drehrichtung der Getriebeeingangswelle ab. Des Weiteren ist die Getriebeausgangswelle über die Fahrtrichtungskupplungen mit dem zweiten Planetenradsatz in Wirkverbindung bringbar.

Um das stufenlose Leistungsverzweigungsgetriebe an in einem Fahrzeug zur Verfügung stehende Bauräume anpassen zu können, sind die Fahrtrichtungskupplungen und die zugeordneten Zahnradpaarungen bei weiteren Ausführungsformen des erfindungsgemäßen stufenlosen im Bereich der Wirkverbindung zwischen dem zweiten Planetenradsatz und der Getriebeausgangswelle angeordnet.

Ist der Variator als hydraulischer Variator mit zwei hydraulischen Maschinen ausgebildet, wobei das Schluckvolumen wenigstens einer der hydraulischen Maschinen variierbar ist, ist das erfindungsgemäße Leistungsverzweigungsgetriebe durch eine hohe Leistungsdichte gekennzeichnet.

Bei einer hierzu alternativen und mit hohem Wirkungsgrad betreibbaren Ausführungsform des erfindungsgemäßen stufenlosen Leistungsverzweigungsgetriebes ist der Variator als elektrischer Variator mit zwei elektrischen Maschinen ausgebildet. Dabei besteht die Möglichkeit, die mit der Getriebeeingangswelle wirkverbundene elektrische Maschine des Variators über den gesamten Betriebsbereich des Getriebes bei einer direkten Ankopplung an die Getriebeeingangswelle jeweils mit der Drehzahl der Antriebsmaschine oder bei einer Anbindung der elektrischen Maschine über ein Getriebe mit einer mit der Drehzahl der Antriebsmaschine korrespondierenden Drehzahl zu betreiben. Im Unterschied hierzu ist die Drehzahl der anderen und mit der zweiten Welle des ersten Planetenradsatzes gekoppelten elektrischen Maschine zum Einstellen der Übersetzung des erfindungsgemäßen Leistungsverzweigungsgetriebes unabhängig von der Drehzahl der Getriebeeingangswelle stufenlos veränderbar.

Bei bauraumgünstigen Ausführungsformen des erfindungsgemäßen stufenlosen Leistungsverzweigungsgetriebes ist der Variator mit seiner ersten Welle direkt, über Stirnräder und/oder über einen Planetenradsatz mit der ersten Welle des ersten Planetenradsatzes wirkverbunden und mit seiner zweiten Welle direkt, über Stirnräder und/oder über einen Planetenradsatz mit der zweiten Welle des ersten Planetenradsatzes wirkverbunden.

Dabei ist der Variator bei der direkten Anbindung an die Getriebeeingangswelle und/oder an die zweite Welle des ersten Planetenradsatzes größer zu dimensionieren, da das von der Getriebeeingangswelle und von der zweiten Welle des ersten Planetenradsatzes jeweils anliegende Drehmoment höher ist als bei der Anbindung des Variators an die Getriebeeingangswelle und an die zweite Welle über die Stirnräder und/oder den Planetenradsatz. Im Unterschied hierzu wird jedoch für die zusätzlichen Stirnräder und/oder den zusätzlichen Planetenradsatz ebenfalls Bauraum benötigt, der unter Umständen durch die dann mögliche kleinere Dimensionierung des Variators zur Verfügung steht. Die Auswahl der Anbindung des Variators an die Getriebeeingangswelle und an die zweite Welle des ersten Planetenradsatzes erfolgt in Abhängigkeit des jeweils vorliegenden Anwendungsfalles und des jeweils zur Verfügung stehenden Bauraumes im Fahrzeug.

Sind der erste Planetenradsatz, der zweite Planetenradsatz, die Fahrtrichtungskupplungen, die Schaltelemente und/oder der Variator koaxial zueinander angeordnet, ist das stufenlose Leistungsverzweigungsgetriebe in radialer Richtung durch einen geringen Bauraumbedarf gekennzeichnet.

Bei in axialer Richtung durch einen geringen Bauraumbedarf gekennzeichneten Ausführungsformen des erfindungsgemäßen stufenlosen Leistungsverzweigungsgetriebes sind der erste Planetenradsatz, der zweite Planetenradsatz, die Fahrtrichtungskupplungen, die Schaltelemente und/oder der Variator radial zueinander versetzt und auf zueinander beabstandeten Vorgelegewellen angeordnet. Diese Ausführungsformen sind in radialer Richtung durch einen höheren Bauraumbedarf gekennzeichnet als die koaxiale Anordnung der vorgenannten Baugruppen des Leistungsverzweigungsgetriebes.

Ist der Variator in axialer Richtung zwischen dem Getriebeeingang und dem ersten Planetenradsatz koaxial zum ersten Planetenradsatz oder in radialer Richtung versetzt zum ersten Planetenradsatz angeordnet, sind die Wellen des Variators in axialer Richtung mit einer geringen Länge ausführbar. Damit sind Durchbiegungen im Bereich der Wellen des Variators zwischen Stützstellen der Wellen gering.

Die zweite Welle des ersten Planetenradsatzes ist bei einer weiteren bauraumgünstig ausführbaren Ausführungsform des erfindungsgemäßen stufenlosen Leistungsverzweigungsgetriebes in axialer Richtung zwischen dem Getriebeeingang und dem ersten Planetenradsatz mit der zweiten Welle des Variators verbunden, während die erste Welle des Variators mit der ersten Welle des ersten Planetenradsatzes in axialer Richtung zwischen dem zweiten Planetenradsatz und dem Getriebeausgang in Wirkverbindung steht.

Bei einer in axialer Richtung durch einen geringen Bauraumbedarf gekennzeichneten Weiterbildung des erfindungsgemäßen stufenlosen Leistungsverzweigungsgetriebes sind die Fahrtrichtungskupplungen radial zueinander versetzt und vorzugsweise in axialer Richtung in einer gemeinsamen Ebene angeordnet.

Das erfindungsgemäße stufenlose Leistungsverzweigungsgetriebe ist auf einfache Art und Weise in verschiedene bestehende Fahrzeugsysteme integrierbar, wenn der Getriebeeingang und der Getriebeausgang auf der gleichen Seite oder in axialer Richtung auf verschiedenen Seiten angeordnet sind.

Bei einer mit hohem Wirkungsgrad betreibbaren Ausführungsform des erfindungsgemäßen stufenlosen Leistungsverzweigungsgetriebes umfasst der erste Planetenradsatz einen Stufenplanetenradsatz. Dabei ist die erste Welle des ersten Planetenradsatzes mit einem Sonnenrad des Stufenplanetenradsatzes, die zweite Welle des ersten Planetenradsatzes mit einem Hohlrad des Stufenplanetenradsatzes, die dritte Welle des ersten Planetenradsatzes mit einem Planetenträger des Stufenplanetenradsatzes und die vierte Welle des ersten Planetenradsatzes mit einem weiteren Sonnenrad des Stufenplanetenradsatzes verbunden. Auf dem Planetenträger sind Stufenplanetenräder drehbar angeordnet, die mit einem größeren Durchmesserbereich mit dem Hohlrad und dem weiteren Sonnenrad kämmen, dessen Durchmesser wiederum kleiner als der Durchmesser des Sonnenrades ist. Des Weiteren stehen die Planetenräder mit einem kleineren Durchmesserbereich mit dem Sonnenrad in Eingriff. Durch die Verwendung eines solchen Stufenplanetenradsatzes zirkuliert im Bereich des ersten Planetenradsatzes keine oder lediglich eine geringe Blindleistung, womit das erfindungsgemäße Getriebe mit hoher Effizienz betreibbar ist.

Der erste Planetenradsatz umfasst bei einer hierzu mit geringerem Aufwand herstellbaren Ausführungsform des erfindungsgemäßen stufenlosen Leistungsverzweigungsgetriebes zwei Hohlräder, ein Sonnenrad und einen Planetenträger, wobei auf dem Planetenträger mehrere Planetenräder drehbar gelagert sind. Dabei kämmt zumindest ein erstes Planetenrad mit dem einen Hohlrad und mit wenigstens einem zweiten Planetenrad, während das wenigstens zweite Planetenrad mit dem anderen Hohlrad und dem Sonnenrad in Eingriff steht. Die erste Welle des ersten Planetenradsatzes ist mit dem einen Hohlrad, die zweite Welle des ersten Planetenradsatzes mit dem anderen Hohlrad, die dritte Welle des ersten Planetenradsatzes mit dem Planetenträger und die vierte Welle des ersten Planetenradsatzes mit dem Sonnenrad verbunden.

Sind das erste Planetenrad und das zweite Planetenrad in axialer Richtung versetzt zueinander und auf dem gleichen Durchmesser drehbar auf dem Planetenträger angeordnet und weisen diese wie die Hohlräder die gleiche Zähnezahl auf, ist die Drehzahl der zweiten Welle des ersten Planetenradsatzes in allen Fahrbereichen innerhalb eines in Bezug auf den Nullpunkt der Drehzahl der zweiten Welle symmetrischen Drehzahlbereiches stufenlos variierbar.

Bei einer ebenfalls einfach herstellbaren Ausführungsform des erfindungsgemäßen stufenlosen Leistungsverzweigungsgetriebes umfasst der erste Planetenradsatz zwei einfache Planetengetriebe mit jeweils einem Hohlrad, mit jeweils einem Planetenträger und darauf drehbar angeordneten Planetenrädern und mit jeweils einem Sonnenrad. Die erste Welle des ersten Planetenradsatzes ist dabei mit dem Planetenträger des ersten einfachen Planetengetriebes, die zweite Welle des ersten Planetenradsatzes mit dem Sonnenrad des ersten einfachen Planetengetriebes und mit dem Hohlrad des zweiten einfachen Planetengetriebes verbunden. Zusätzlich stehen die dritte Welle des ersten Planetenradsatzes mit dem Planetenträger des zweiten einfachen Planetengetriebes und die vierte Welle des ersten Planetenradsatzes mit dem Sonnenrad des zweiten einfachen Planetengetriebes und mit dem Hohlrad des ersten einfachen Planetengetriebes in Wirkverbindung.

Letztbeschriebene Ausführungsform des erfindungsgemäßen stufenlosen Leistungsverzweigungsgetriebes ist in axialer Richtung durch einen geringen Bauraumbedarf gekennzeichnet, wenn das erste einfache Planetengetriebe radial innerhalb des zweiten einfachen Planetengetriebes angeordnet ist.

Eine weitere einfach herstellbare Ausführungsform des erfindungsgemäßen Leistungsverzweigungsgetriebes ist mit einem ersten Planetenradsatz ausgebildet, der zwei einfache Planetengetriebe mit jeweils einem Hohlrad, mit jeweils einem Planetenträger und darauf drehbar angeordneten Planetenrädern und mit jeweils einem Sonnenrad umfasst. Die erste Welle des ersten Planetenradsatzes ist mit dem Planetenträger des ersten einfachen Planetengetriebes verbunden. Die zweite Welle des ersten Planetenradsatzes steht mit dem Hohlrad des zweiten einfachen Planetengetriebes in Wirkverbindung. Des Weiteren ist die dritte Welle des ersten Planetenradsatzes mit dem Planetenträger des zweiten einfachen Planetengetriebes und mit dem Hohlrad des ersten einfachen Planetengetriebes verbunden. Darüber hinaus ist die vierte Welle des ersten Planetenradsatzes mit dem Sonnenrad des zweiten einfachen Planetengetriebes und mit dem Sonnenrad des ersten einfachen Planetengetriebes gekoppelt.

Der erste Planetenradsatz umfasst bei einer weiteren bauraumgünstigen und mit geringen Kosten herstellbaren Ausführungsform des erfindungsgemäßen Leistungsverzweigungsgetriebes einen Ravigneaux-Radsatz. Die erste Welle des ersten Planetenradsatzes ist mit einem Planetenträger des Ravigneaux-Radsatzes gekoppelt. Die zweite Welle des ersten Planetenradsatzes steht mit einem Sonnenrad des Ravigneaux-Radsatzes in Wirkverbindung, während die dritte Welle des ersten Planetenradsatzes mit einem Hohlrad des Ravigneaux-Radsatzes verbunden ist. Darüber hinaus ist die vierte Welle des ersten Planetenradsatzes mit einem weiteren Sonnenrad des Ravigneaux-Radsatzes wirkverbunden. Dabei ist das Sonnenrad mit einem kleineren Durchmesser ausgeführt als das weitere Sonnenrad.

Bei einer weiteren kostengünstig herstellbaren und durch einen geringen Bauraumbedarf gekennzeichneten Ausführungsform des erfindungsgemäßen Leistungsverzweigungsgetriebes umfasst der erste Planetenradsatz des Leistungsverzweigungsgetriebes einen Planetenradsatz mit zwei Hohlrädern, mit einem Planetenträger und mit einem Sonnenrad. Auf dem Planetenträger sind mehrere Planetenräder drehbar angeordnet. Ein Teil der Planetenräder ist mit einer größeren axialen Länge als ein weiterer Teil der Planetenräder ausgeführt. Die längeren Planetenräder kämmen mit dem einen Hohlrad, dem Sonnenrad und den kürzeren Planetenrädern, während die kürzeren Planetenräder mit den längeren Planetenrädern und mit dem anderen Hohlrad in Eingriff stehen. Das eine Hohlrad ist mit einem kleinerem Durchmesser als das andere Hohlrad ausgeführt und radial vom größeren Hohlrad übergriffen.

Dabei ist die erste Welle des ersten Planetenradsatzes bei einer konstruktiv einfachen und mit geringen Kosten herstellbaren Weiterbildung der letztbeschriebenen Ausführungsform des Leistungsverzweigungsgetriebes mit dem Planetenträger verbunden, während die zweite Welle des ersten Planetenradsatzes mit den Sonnenrad gekoppelt ist. Des Weiteren steht die dritte Welle des ersten Planetenradsatzes mit dem größeren Hohlrad in Wirkverbindung und die vierte Welle des ersten Planetenradsatzes ist mit dem kleineren Hohlrad gekoppelt.

Eine Weiterbildung des stufenlosen Leistungsverzweigungsgetriebes umfasst einen als einfaches Planetengetriebe ausgebildeten zweiten Planetenradsatz. Dabei ist die erste Welle des zweiten Planetenradsatzes als Sonnenrad, die zweite Welle des zweiten Planetenradsatzes als Hohlrad und die dritte Welle des zweiten Planetenradsatzes als Planetenträger ausgeführt, wobei auf dem Planetenträger Planetenräder drehbar gelagert sind.

Sowohl die in den Patentansprüchen angegebenen Merkmale als auch die in den nachfolgenden Ausführungsbeispielen des erfindungsgemäßen Leistungsverzweigungsgetriebes angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Leistungsverzweigungsgetriebes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

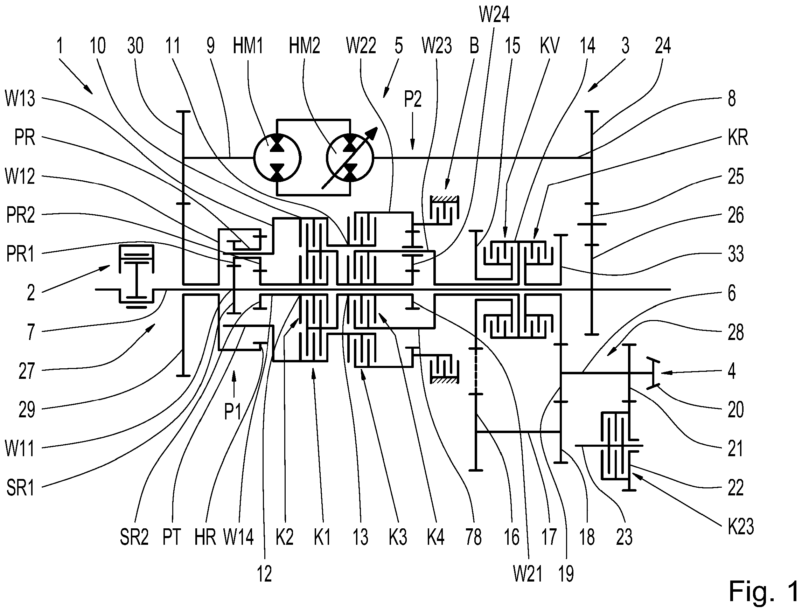

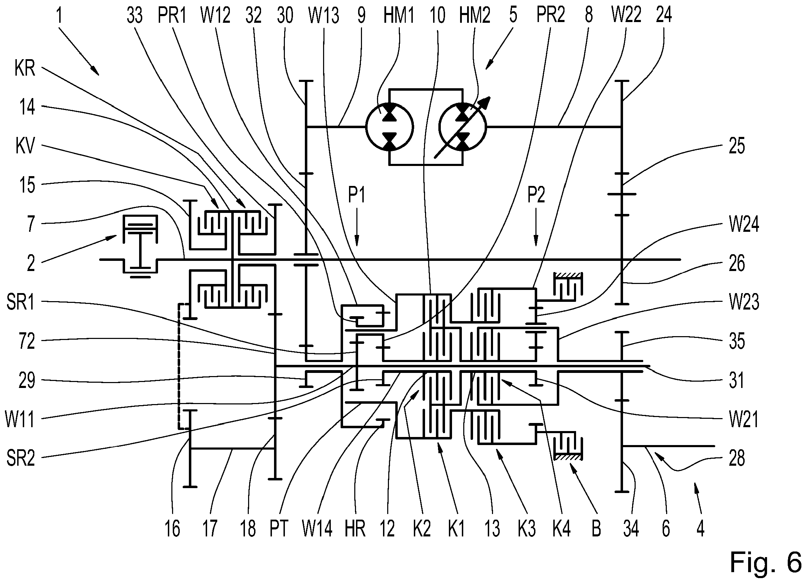

Fig. 1 bis Fig. 26 zeigen jeweils eine schematisierte Darstellung eines Fahrzeugantriebsstranges, wobei die Fahrzeugantriebsstränge jeweils mit verschiedenen Ausführungsformen eines stufenlosen Leistungsverzweigungsgetriebes ausgebildet sind, wobei die Figuren 6, 11, 14, 16, 17 und 18 nicht vom Schutzbereich des Hauptanspruchs umfasst sind.

Fig. 1 zeigt eine stark schematisierte Ansicht eines Fahrzeugantriebsstranges 1 mit einer als Brennkraftmaschine ausgeführten Antriebsmaschine 2, mit einem stufenlosen Leistungsverzweigungsgetriebe 3 und mit einem Abtrieb 4. Im Leistungsverzweigungsgetriebe 3 sind vier Fahrbereiche darstellbar, innerhalb welchen die Übersetzung des Leistungsverzweigungsgetriebes 3 mithilfe eines Variators 5 stufenlos variierbar ist. Ein mehrere Wellen W11 bis W14 umfassender erster Planetenradsatz P1 ist über mehrere Schaltelemente K1 bis K4 mit einem ebenfalls mehrere Wellen W21 bis W23 aufweisenden weiteren Planetenradsatz P2 in Wirkverbindung bringbar. Der zweite Planetenradsatz P2 ist über sogenannte Fahrtrichtungskupplungen KV und KR mit einer Getriebeausgangswelle 6 in Wirkverbindung bringbar.

Der erste Planetenradsatz P1 steht über eine erste Welle W11 mit einer Getriebeeingangswelle 7 und einer ersten Welle 8 des Variators 5 in Wirkverbindung. Des Weiteren ist der erste Planetenradsatz P1 über eine zweite Welle W12 mit einer zweiten Welle 9 des Variators 5 verbunden. Zusätzlich ist der erste Planetenradsatz P1 über eine dritte Welle W13 mit Schaltelementhälften 10, 11 der Schaltelemente K1 und K3 sowie über eine vierte Welle W14 mit einer Schaltelementhälfte 12 eines weiteren Schaltelementes K2 gekoppelt.

Die dritte Welle W13 des ersten Planetenradsatzes P1 ist über das Schaltelement K1 mit einer als Sonnenrad ausgeführten ersten Welle W21 des zweiten Planetenradsatzes P2 und über das weitere Schaltelement K3 mit einer zweiten Welle W22 des zweiten Planetenradsatzes P2 in Wirkverbindung bringbar.

Darüber hinaus ist die vierte Welle W14 des ersten Planetenradsatzes P1 über das weitere Schaltelement K2 mit der ersten Welle W21 des zweiten Planetenradsatzes P2 und einer getriebeeingangsseitigen Schaltelementhälfte 13 eines zusätzlichen Schaltelementes K4 koppelbar, dessen getriebeausgangsseitige Schaltelementhälfte 78 mit einer dritten Welle W23 des zweiten Planetenradsatzes P2 verbunden ist. Somit ist die vierte Welle W14 des ersten Planetenradsatzes P1 über das zusätzliche Schaltelement K4 mit der dritten Welle W23 des zweiten Planetenradsatzes P2 in Wirkverbindung bringbar.

Vorliegend ist der zweite Planetenradsatz P2 über die Fahrtrichtungskupplungen KV und KR mit seiner dritten Welle W23, die als Planetensteg ausgeführt ist, mit der Getriebeausgangswelle 6 in der nachfolgend näher beschriebenen Art und Weise in Wirkverbindung bringbar.

Die dritte Welle W23 des zweiten Planetenradsatzes P2 ist vorliegend mit einer gemeinsamen Schaltelementhälfte 14 der Fahrtrichtungskupplungen KV und KR drehfest verbunden. Sind beide Fahrtrichtungskupplungen KV und KR geöffnet, ist die Wirkverbindung zwischen der dritten Welle W23 des zweiten Planetenradsatzes P2 und der Getriebeausgangswelle 6 getrennt. Für den Fall, dass die Fahrtrichtungskupplung KV für Vorwärtsfahrt geschlossen ist und die Fahrtrichtungskupplung KR für Rückwärtsfahrt sich gleichzeitig in ihrem vollständig geöffneten Betriebszustand befindet, wird ein auf der dritten Welle W23 des zweiten Planetenradsatzes P2 drehbar angeordnetes Losrad 15 mit der dritten Welle W23 verbunden. Das Losrad 15 kämmt mit einem Festrad 16 einer Vorgelegewelle 17, die mit einem weiteren Festrad 18 ausgeführt ist.

Das weitere Festrad 18 kämmt wiederum mit einem Festrad 19 der Getriebeausgangswelle 6, die bei dem in Fig. 1 gezeigten Ausführungsbeispiel des Fahrzeugantriebsstranges 1 über ein Kegelrad 20 mit einer nicht näher dargestellten antreibbaren Fahrzeugachse in Wirkverbindung steht. Über die Fahrtrichtungskupplung KR ist ein ebenfalls auf der Getriebeeingangswelle 7 drehbar angeordnetes Losrad 33 drehfest mit der dritten Welle W23 des zweiten Planetenradsatzes P2 verbindbar, das mit dem Festrad 19 in Eingriff steht. Zusätzlich besteht wie in Fig. 1 gezeigt die Möglichkeit, dass ein weiteres Festrad 21 der Getriebeausgangswelle 6 mit einem drehbar auf einer weiteren Vorgelegewelle 23 gelagerten Losrad 22 kämmt, das über ein weiteres Schaltelement K23 drehfest mit der weiteren Vorgelegewelle 23 verbindbar ist. Über die weitere Vorgelegewelle 23 ist die Getriebeausgangswelle 6 mit einer weiteren antreibbaren Fahrzeugachse des Fahrzeugantriebsstranges 1 koppelbar, womit ein mit dem Fahrzeugantriebsstrang 1 ausgeführtes Fahrzeug, wie eine Landmaschine oder dergleichen, als allradbetriebenes Fahrzeug darstellbar ist.

Hiervon abweichend ist die Getriebeausgangswelle 6 auch auf andere geeignete Art und Weise mit einer oder mit mehreren antreibbaren Fahrzeugachsen koppelbar. Dabei kann die Verbindung zwischen der Getriebeausgangswelle 6 und solchen antreibbaren Fahrzeugachsen mit einem Zentraldifferential mit zugeordneter Überbrückungskupplung oder anderen geeigneten Koppeleinrichtungen ausgeführt sein. Im Bereich des Zentraldifferentials erfolgt eine Leistungsverzweigung zwischen zwei antreibbaren Fahrzeugachsen ohne zusätzlichen Steuer und-Regelaufwand, wobei die Leistungsverzweigung des Zentraldifferentials über die Überbrückungskupplung mit geringem Aufwand deaktivierbar ist.

Des Weiteren besteht auch die Möglichkeit, zwei mit der Getriebeausgangswelle in Wirkverbindung bringbare antreibbare Achsen starr miteinander zu verbinden und damit einen permanenten Allradantrieb vorzusehen oder lediglich eine antreibbare Fahrzeugachse, vorzugsweise die Fahrzeughinterachse, mit der Getriebeausganswelle zu koppeln.

In Abhängigkeit des jeweils vorliegenden Anwendungsfalles ist die über das Kegelrad 20 mit der Getriebeausgangswelle 6 wirkverbundene antreibbare Fahrzeugachse als Fahrzeughinterachse oder als Fahrzeugvorderachse und die mit der Vorgelegewelle 23 wirkverbundene antreibbare weitere Fahrzeugachse als Fahrzeugvorderachse oder als Fahrzeughinterachse ausführbar.

Die erste Welle 8 des Variators 5 ist vorliegend über ein Festrad 24 der ersten Welle 8 des Variators 5, ein damit kämmendes Zwischenrad 25 und ein damit in Eingriff stehendes Festrad 26 der Getriebeeingangswelle 7 mit der Getriebeeingangswelle 7 wirkverbunden. Hierfür erstreckt sich die Getriebeeingangswelle 7 ausgehend vom Getriebeeingang 27 in axialer Richtung des stufenlosen Leistungsverzweigungsgetriebes 3 bis zum Getriebeausgang 28 und in Abhängigkeit des jeweils vorliegenden Anwendungsfalles auch über die im Bereich des Getriebeausgangs 28 angeordnete antreibbare Fahrzeugachse in axialer Richtung des Fahrzeugantriebsstranges 1 hinaus. Zusätzlich ist die Getriebeeingangswelle 7 im Bereich des Getriebeausgangs 28 in an sich bekannter Art und Weise mit einer so genannten Zapfwelle über ein Zapfwellengetriebe in Wirkverbindung bringbar, über die so genannte Anbaugeräte des mit dem Fahrzeugantriebsstrang 1 ausgeführten Fahrzeuges mit Drehmoment der Antriebsmaschine 2 beaufschlagbar bzw. versorgbar sind.

Die zweite Welle 9 des Variators 5 ist vorliegend über ein mit der zweiten Welle W12 des ersten Planetenradsatzes P1 drehfest verbundenes Zahnrad 29 und ein damit kämmendes Festrad 30 der zweiten Welle 9 des Variators 5 wirkverbunden. Zusätzlich ist die als Hohlrad ausgeführte zweite Welle W22 des zweiten Planetenradsatzes P2 über ein als Bremse ausgeführtes Schaltelement B in geschlossenem Betriebszustand des Schaltelementes B drehfest bzw. gehäusefest darstellbar.

Der Variator 5 ist bei dem in Fig. 1 dargestellten Ausführungsbeispiel des Leistungsverzweigungsgetriebes 3 als hydraulischer Variator ausgebildet, der zwei hydraulische Maschinen HM1 und HM2 umfasst. Dabei ist das Schluckvolumen der ersten hydraulischen Maschine HM1 konstant, während das Schluckvolumen der zweiten hydraulischen Maschine HM2 variierbar ist. Zusätzlich sind die beiden hydraulischen Maschinen HM1 und HM2 sowohl als Pumpe als auch als Motor betreibbar, wobei die Betriebsart der beiden hydraulischen Maschinen HM1 und HM2 während der Darstellung der vier Fahrbereiche zwischen einem Pumpenbetrieb und einem motorischen Betrieb mehrfach wechselt.

Zur Darstellung des ersten Fahrbereiches, innerhalb dem die Übersetzung des Leistungsverzweigungsgetriebes 3 am größten ist und über den das größte Zugkraftangebot zur Verfügung stellbar ist, sind das erste Schaltelement K1 und das weitere Schaltelement B zu schließen, während die weiteren Schaltelemente K2 bis K4 in ihren geöffneten Betriebszustand zu überführen sind. Um den sich an den ersten Fahrbereich anschließenden zweiten Fahrbereich im Leistungsverzweigungsgetriebe 3 einlegen zu können, sind die beiden Schaltelemente K2 und B zu schließen, während die Schaltelemente K1, K3 und K4 in ihren geöffneten Betriebszustand zu überführen bzw. in diesem zu halten sind.

Der sich wiederum an den zweiten Fahrbereich anschließende dritte Fahrbereich ist dann im Leistungsverzweigungsgetriebe 3 eingelegt, wenn die beiden Schaltelemente K2 und K3 geschlossen sind und sich die Schaltelemente K1, K4 und B gleichzeitig in geöffnetem Betriebszustand befinden. Der vierte Fahrbereich, der sich an den dritten Fahrbereich anschließt, ist dann im Leistungsverzweigungsgetriebe 3 eingelegt, wenn die Schaltelemente K1, K3 und B geöffnet sind und die Schaltelemente K2 und K4 gleichzeitig geschlossen sind. Das mit dem Fahrzeugantriebsstrang 1 ausgeführte Fahrzeug wird unabhängig davon, welcher der vier Fahrbereiche im Leistungsverzweigungsgetriebe 3 eingelegt ist, in Vorwärtsfahrtrichtung betrieben, wenn die Fahrtrichtungskupplung KV geschlossen und die Fahrtrichtungskupplung KR geöffnet ist. Im Unterschied hierzu wird ein solches Fahrzeug in Rückwärtsfahrtrichtung betrieben, wenn die Fahrtrichtungskupplung KR geschlossen und die weitere Fahrtrichtungskupplung KV geöffnet ist.

Der erste Planetenradsatz P1, die Schaltelemente K1 bis K4, der zweite Planetenradsatz P2, das Schaltelement B und die Fahrtrichtungskupplungen KV und KR sind vorliegend alle koaxial zueinander auf der Getriebeeingangswelle 7 angeordnet, womit das Leistungsverzweigungsgetriebe 3 in radialer Richtung einen geringen Bauraumbedarf aufweist.

Des Weiteren umfasst der erste Planetenradsatz P1 einen Stufenplanetenradsatz. Dabei ist die erste Welle W11 des ersten Planetenradsatzes P1 mit einem Sonnenrad SR1 des Stufenplanetenradsatzes verbunden. Die zweite Welle W12 des ersten Planetenradsatzes P1 steht mit einem Hohlrad HR des Stufenplanetenradsatzes in Wirkverbindung, während die dritte Welle W13 des ersten Planetenradsatzes P1 mit einem Planetenträger PT des Stufenplanetenradsatzes gekoppelt ist, auf dem Stufenplanetenräder PR drehbar gelagert sind. Die vierte Welle W14 des ersten Planetenradsatzes P1 ist mit einem weiteren Sonnenrad SR2 des Stufenplanetenradsatzes verbunden.

Die Stufenplanetenräder PR kämmen mit einem größeren Durchmesserbereich PR2 mit dem Hohlrad HR und dem weiteren Sonnenrad SR2, dessen Durchmesser kleiner als der Durchmesser des Sonnenrades SR1 ist. Des Weiteren stehen die Planetenräder PR mit einem kleineren Durchmesserbereich PR1 mit dem Sonnenrad SR1 in Eingriff.

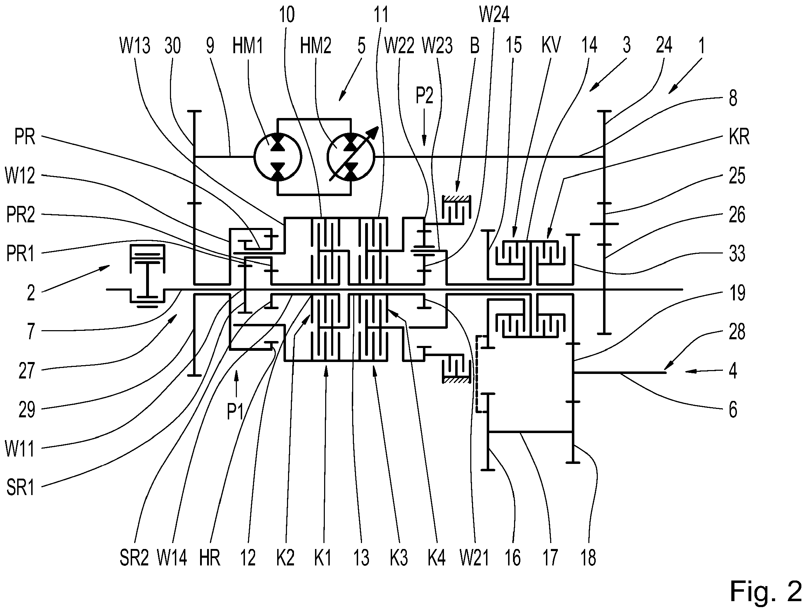

Fig. 2 bis Fig. 26 zeigen Fig. 1 entsprechende Darstellungen weiterer Ausführungsbeispiele des Fahrzeugantriebsstranges 1, die sich jeweils im Wesentlichen lediglich im Bereich des stufenlosen Leistungsverzweigungsgetriebes 3 sowie durch verschiedene Anordnungen der einzelnen Baugruppen des Leistungsverzweigungsgetriebes 3 voneinander unterscheiden. Aus diesem Grund wird in der nachfolgenden Beschreibung der verschiedenen Ausführungsbeispiele gemäß Fig. 2 bis Fig. 26 jeweils lediglich auf die Unterschiede zwischen den nachfolgend beschriebenen Ausführungsbeispielen und dem in Fig. 1 gezeigten Ausführungsbeispiel des Fahrzeugantriebsstranges näher eingegangen. Bezüglich der weiteren Funktionsweise der verschiedenen Ausführungsbeispiele des Fahrzeugantriebsstranges 1 wird auf die Beschreibung zu Fig. 1 verwiesen.

Bei dem in Fig. 2 dargestellten Ausführungsbeispiel ist die getriebeausgangsseitige Schaltelementhälfte 78 des vierten Schaltelementes K4 einstückig mit der getriebeausgangsseigen Schaltelementhälfte des dritten Schaltelementes K3 ausgebildet, die mit der zweiten Welle W22 des zweiten Planetenradsatzes P2 gekoppelt ist.

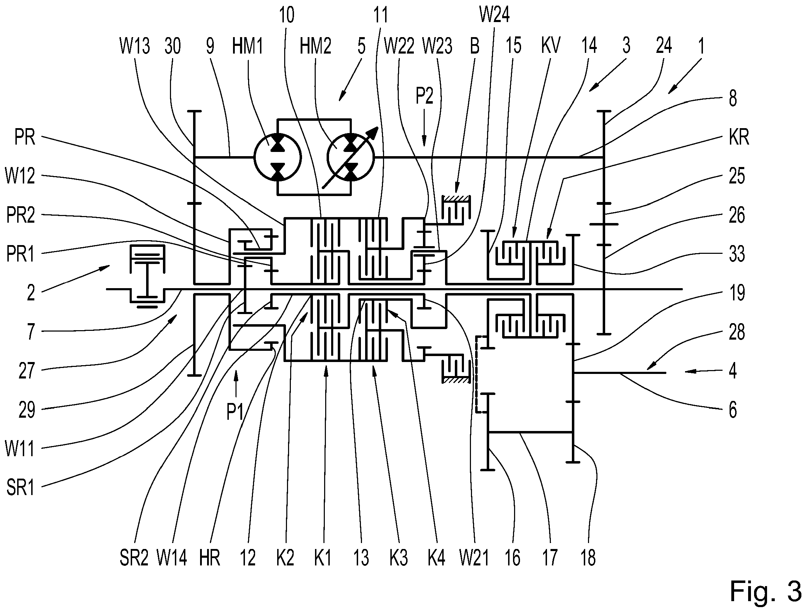

Im Unterschied zu den beiden in Fig. 1 und Fig. 2 gezeigten Ausführungsformen des Leistungsverzweigungsgetriebes 3 ist die Schaltelementhälfte 13 des vierten Schaltelementes K4 des Fahrzeugantriebsstranges 1 gemäß Fig. 3 mit der dritten Welle W23 des zweiten Planetenradsatzes P2 verbunden. Zusätzlich ist das vierte Schaltelement K4 in dem zu Fig. 2 beschriebenen Umfang ausgeführt und steht wie das dritte Schaltelement K3 mit ihrer zweiten Schaltelementhälfte mit der zweiten Welle W22 des zweiten Planetenradsatzes P2 in Wirkverbindung.

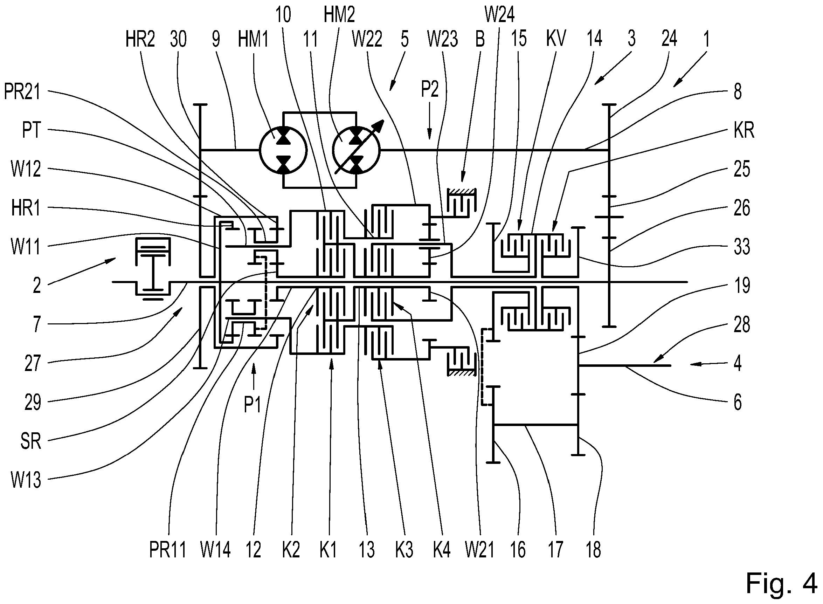

Das in Fig. 4 dargestellte Ausführungsbeispiel des Fahrzeugantriebsstranges 1 ist im Bereich des stufenlosen Leistungsverzweigungsgetriebes 3 mit einem ersten Planetenradsatz P1 ausgebildet, der zwei Hohlräder HR1 und HR2, ein Sonnenrad SR und einen Planetenträger PT umfasst. Auf dem Planetenträger PT sind Planetenräder PR11, PR21 drehbar gelagert. Dabei kämmen die ersten Planetenräder PR11 mit dem einen Hohlrad HR1 und mit den zweiten Planetenrädern PR21, während die zweiten Planetenräder PR21 mit dem zweiten Hohlrad HR2 und dem Sonnenrad SR in Eingriff stehen. Die Planetenräder PR11 und PR21 sind hierfür in axialer Richtung der Getriebeeingangswelle 7 versetzt zueinander angeordnet und im Wesentlichen identisch ausgeführt. Darüber hinaus sind die Planetenräder PR11 und PR21 vorzugsweise auf dem gleichen Durchmesser am Planetenträger PT drehbar lagerbar und vorzugsweise mit der gleichen Zähnezahl ausbildbar, wobei dann auch die Hohlräder HR1 und HR2 die gleiche Zähnezahl aufweisen.

Die erste Welle W11 des ersten Planetenradsatzes P1 ist mit dem ersten Hohlrad HR1 verbunden. Die zweite Welle W12 des ersten Planetenradsatzes P1 ist mit dem anderen Hohlrad HR2 drehfest gekoppelt, während die dritte Welle W13 des ersten Planetenradsatzes P1 mit dem Planetenträger PT drehfest verbunden ist. Die vierte Welle W14 des ersten Planetenradsatzes P1 ist wiederum mit dem Sonnenrad SR verbunden. Bei dem in Fig. 4 dargestellten ersten Planetenradsatz P1 sind die Planetenräder PR11 und PR21 fertigungstechnisch einfacher herstellbar als bei dem Stufenplanetenradsatz gemäß Fig. 1.

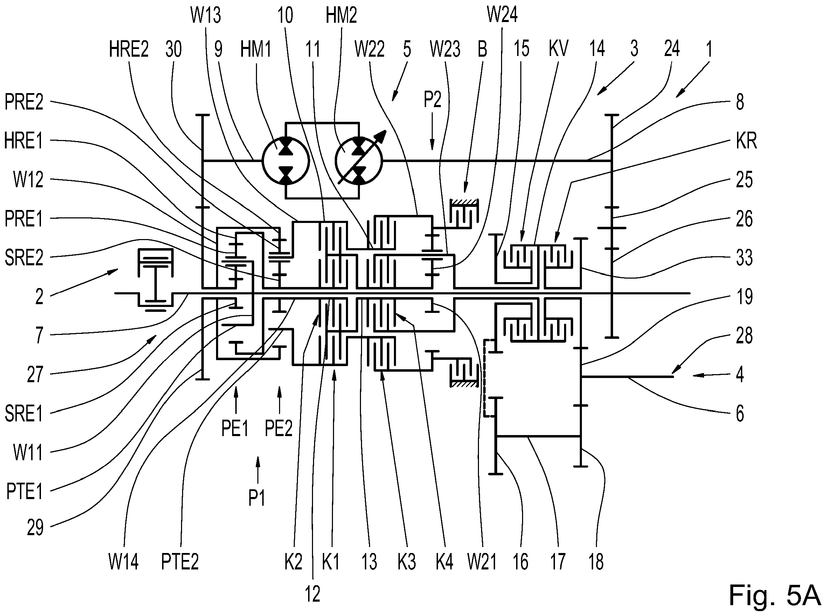

Der erste Planetenradsatz P1 des in Fig. 5A dargestellten Ausführungsbeispiels des Fahrzeugantriebsstranges 1 umfasst zwei einfache Planetengetriebe PE1 und PE2, die jeweils mit einem Hohlrad HRE1 bzw. HRE2, einem Planetenträger PTE1 bzw. PTE2 und darauf drehbar angeordneten Planetenrädern PRE1, PRE2 und einem Sonnenrad SRE1 bzw. SRE2 ausgeführt sind. Die erste Welle W11 des ersten Planetenradsatzes P1 ist mit dem Planetenträger PTE1 des ersten einfachen Planetengetriebes PE1 verbunden. Die zweite Welle W12 des ersten Planetenradsatzes P1 ist mit dem Sonnenrad SRE1 des ersten einfachen Planetengetriebes PE1 und mit dem Hohlrad HRE2 des zweiten einfachen Planetengetriebes PE2 wirkverbunden. Zusätzlich steht die dritte Welle W13 des ersten Planetenradsatzes P1 mit dem Planetenträger PTE2 des zweiten einfachen Planetengetriebes PE2 in Wirkverbindung. Des Weiteren ist die vierte Welle W14 des ersten Planetenradsatzes P1 mit dem Sonnenrad SRE2 des zweiten einfachen Planetengetriebes PE2 und mit dem Hohlrad HRE1 des ersten einfachen Planetengetriebes PE1 gekoppelt. Diese Ausführungsform des ersten Planetenradsatzes P1 ist wiederum im Vergleich zu dem in Fig. 1 gezeigten und mit einem Stufenplanetenradsatz ausgeführten ersten Planetenradsatz P1 einfacher herstellbar.

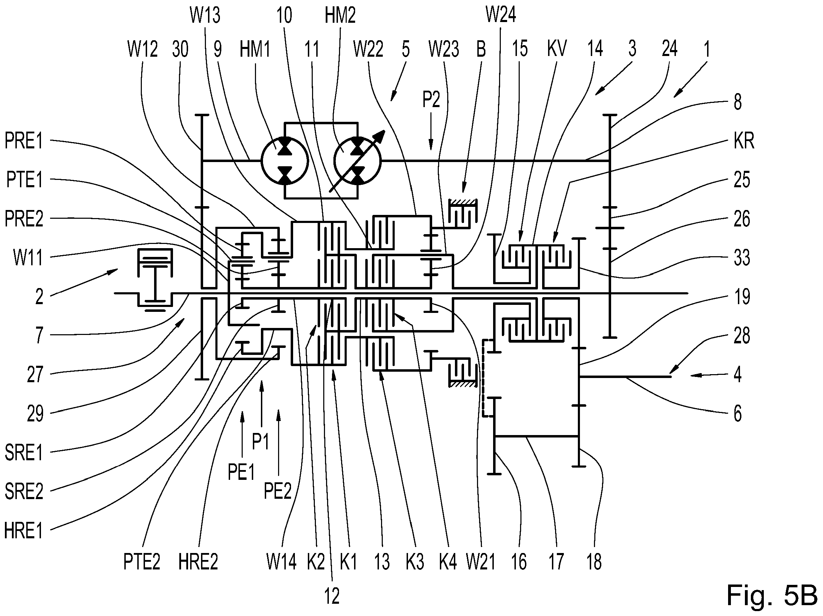

Der in Fig. 5B dargestellte Fahrzeugantriebsstrang 1 ist im Bereich des Leistungsverzweigungsgetriebes 3 mit einer weiteren Variante des ersten Planetenradsatzes P1 ausgebildet. Der erste Planetenradsatz P1 umfasst wie der in Fig. 5A gezeigte erste Planetenradsatz P1 zwei einfache Planetengetriebe PE1, PE2 mit jeweils einem Hohlrad HRE1, HRE2, mit jeweils einem Planetenträger PTE1, PTE2 und mit jeweils einem Sonnenrad SRE1, SRE2 ausgeführt sind. Die erste Welle W11 des ersten Planetenradsatzes P1 ist mit dem Planetenträger PTE1 des ersten einfachen Planetengetriebes PE1 verbunden. Die zweite Welle W12 des ersten Planetenradsatzes P1 steht mit dem Hohlrad HRE2 des zweiten einfachen Planetengetriebes PE2 in Wirkverbindung. Des Weiteren ist die dritte Welle W13 des ersten Planetenradsatzes P1 mit dem Planetenträger PTE2 des zweiten einfachen Planetengetriebes PE2 und mit dem Hohlrad HRE1 des ersten einfachen Planetengetriebes PE1 verbunden. Darüber hinaus ist die vierte Welle W14 des ersten Planetenradsatzes P1 mit dem Sonnenrad SRE2 des zweiten einfachen Planetengetriebes PE2 und mit dem Sonnenrad SRE1 des ersten einfachen Planetengetriebes PE1 gekoppelt.

Das in Fig. 6 dargestellte Ausführungsbeispiel des Fahrzeugantriebsstranges 1 umfasst im Wesentlichen die gleichen Komponenten wie der Fahrzeugantriebsstrang 1 gemäß Fig. 1. Die erste Welle W11 des ersten Planetenradsatzes P1 steht über die Fahrtrichtungskupplungen KV und KR mit der Getriebeeingangswelle 7 in Wirkverbindung, während die zweite Welle W23 des zweiten Planetenradsatzes P2 mit dem Abtrieb 6 permanent verbunden ist. Dabei sind die Fahrtrichtungskupplungen KV und KR des stufenlosen Leistungsverzweigungsgetriebes 3 gemäß Fig. 6 im Bereich des Getriebeeingangs 27 koaxial auf der Getriebeeingangswelle 7 angeordnet, während der erste Planetenradsatz P1, die Schaltelemente K1 bis K4 und B auf einer radial zur Getriebeeingangswelle 7 beabstandeten Vorgelegewelle 31 koaxial zueinander angeordnet sind. Darüber hinaus ist die zweite Welle W12 des ersten Planetenradsatzes P1 über ein mit dem Zahnrad 29 kämmendes und drehbar auf der Getriebeeingangswelle 7 gelagertes Losrad 32 mit der zweiten Welle 9 des Variators 5 wirkverbunden, das wiederum mit dem Festrad 30 der zweiten Welle 9 des Variators 5 in Eingriff steht.

Bei der Ausführung des Fahrzeugantriebsstranges 1 gemäß Fig. 6 sind die Losräder 15 und 33 jeweils über die Fahrtrichtungskupplungen KV und KR mit der Getriebeeingangswelle 7 drehfest verbindbar, um die Getriebeausgangswelle 6 mit der gleichen Drehrichtung wie die Getriebeeingangswelle 7 oder mit einer hiervon abweichenden Drehrichtung antreiben zu können.

Hierfür kämmen das Losrad 33 und das Festrad 18 mit einem drehfest mit der Vorgelegewelle 31 verbundenen Festrad 72. Die Vorgelegewelle 31 ist über den ersten Planetenradsatz P1, die Schaltelemente K1 bis K4 und den zweiten Planetenradsatz P2 mit der Getriebeausgangswelle 6 koppelbar. Dabei steht die Getriebeausgangswelle 6 über ein Festrad 34 und ein damit kämmendes Festrad 35 der dritten Welle W23 des zweiten Planetenradsatzes P2 mit der dritten Welle W23 des zweiten Planetenradsatzes P2 in Wirkverbindung.

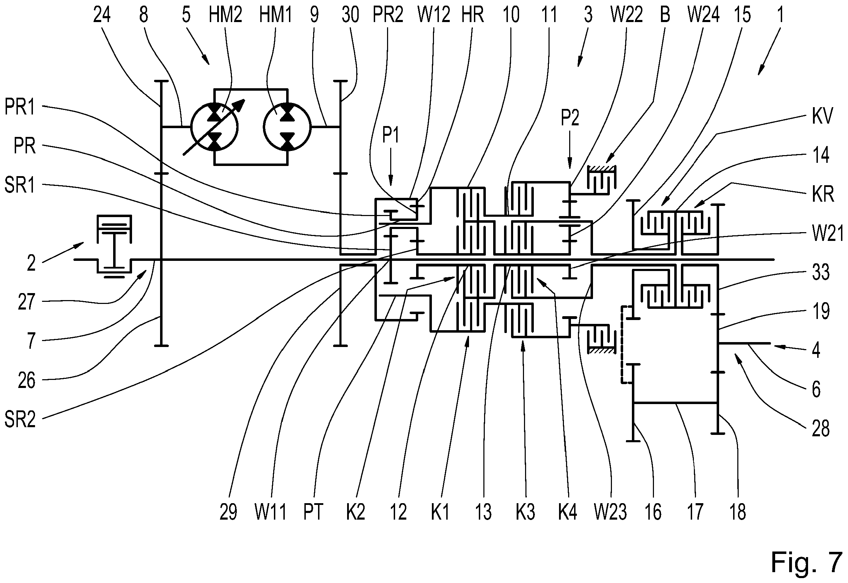

Eine in radialer Richtung durch einen geringen Bauraumbedarf gekennzeichnete Ausführungsform zeigt Fig. 7, bei der der Aufbau und die Anordnung des ersten Planetenradsatzes P1, der Schaltelemente K1 bis K4 und B sowie der Fahrtrichtungskupplungen KV und KR dem in Fig. 1 dargestellten Ausführungsbeispiel entspricht. Der Variator 5 ist im Bereich des Getriebeeingangs 27 in axialer Richtung zwischen der Antriebsmaschine 2 und dem ersten Planetenradsatz P1 angeordnet. Zusätzlich ist der Variator 5 im Bereich seiner ersten Welle 8 auf der der Antriebsmaschine 2 zugewandten Seite über das Festrad 24 und das direkt damit kämmende Festrad 26 der Getriebeeingangswelle 7 wirkverbunden. Des Weiteren steht der Variator 5 mit seiner zweiten Welle 9 auf seiner dem ersten Planetenradsatz P1 zugewandten Seite mit der zweiten Welle W12 des ersten Planetenradsatzes P1 über das Festrad 30 und das damit kämmende Zahnrad 29 in Wirkverbindung.

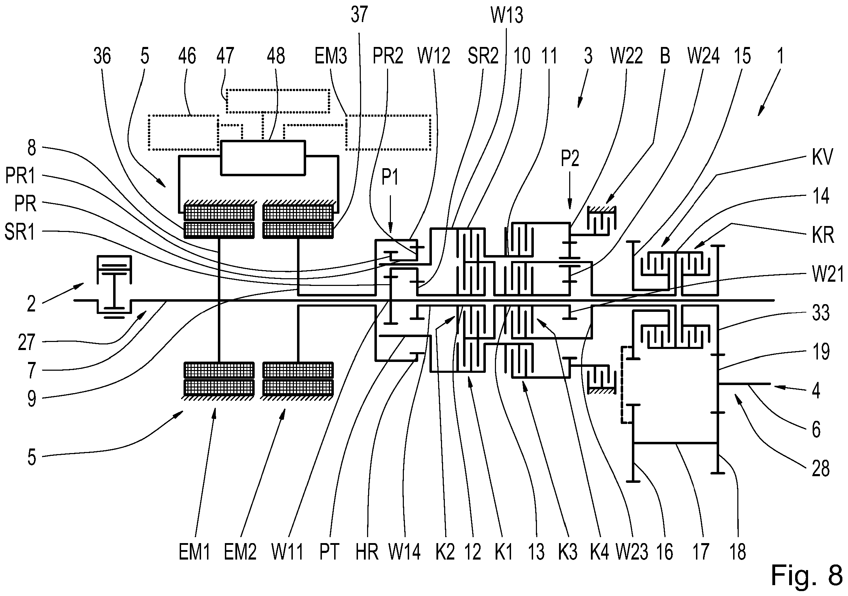

Bei dem in Fig. 8 dargestellten Ausführungsbeispiel des Fahrzeugantriebsstranges 1 ist der Variator 5 als ein elektrischer Variator ausgebildet, der zwei sowohl motorisch als auch generatorisch betreibbare Maschinen EM1 und EM2 umfasst. Die Anordnung und die Ausführung des Planetenradsatzes P1, der Schaltelemente K1 bis K4 und B sowie der Fahrtrichtungskupplungen KV und KR entspricht dem in Fig. 1 dargestellten Ausführungsbeispiel des stufenlosen Leistungsverzweigungsgetriebes 3. Die beiden elektrischen Maschinen EM1 und EM2 sind im Bereich des Getriebeeingangs 27 und in axialer Richtung der Getriebeeingangswelle 7 zwischen der Antriebsmaschine 2 und dem ersten Planetenradsatz P1 koaxial zur Getriebeeingangswelle 7 angeordnet. Dabei ist ein Rotor 36 der ersten elektrischen Maschine EM1 direkt mit der Getriebeeingangswelle 7 verbunden, während ein Rotor 37 der zweiten elektrischen Maschine EM2 drehfest mit der zweiten Welle W12 des ersten Planetenradsatzes P1 gekoppelt ist.

Grundsätzlich besteht bei einer Ausführung des Variators 5 als elektrischer Variator die Möglichkeit, zusätzliche elektrische Verbraucher, wie eine zusätzliche elektrische Maschine EM3, einen zusätzlichen elektrischen Speicher 46 sowie ein Bordnetz 47 auf einfache Art und Weise über eine zugeordnete Regelung und Steuerung 48 mit elektrischer Energie zu versorgen. Dabei ist die Regel- und Steuerbarkeit im Vergleich zu einem hydraulischen Variator besser realisierbar.

Zusätzlich besteht die Möglichkeit, dass die elektrischen Maschinen EM1 und EM2 während des motorischen Betriebes über den fahrzeugseitigen elektrischen Speicher 46 und/oder über eine externe Stromversorgung, wie ein Stromnetz oder dergleichen, mit elektrischer Energie versorgt werden. Hierfür ist ein Fahrzeug beispielsweise mit einer entsprechenden Schnittstelle, wie einer Steckdose und/oder einem Stecker ausführbar, um das Fahrzeug bzw. die elektrischen Maschinen EM1, EM2 in gewünschtem Umfang mit der externen Stromquelle verbinden zu können.

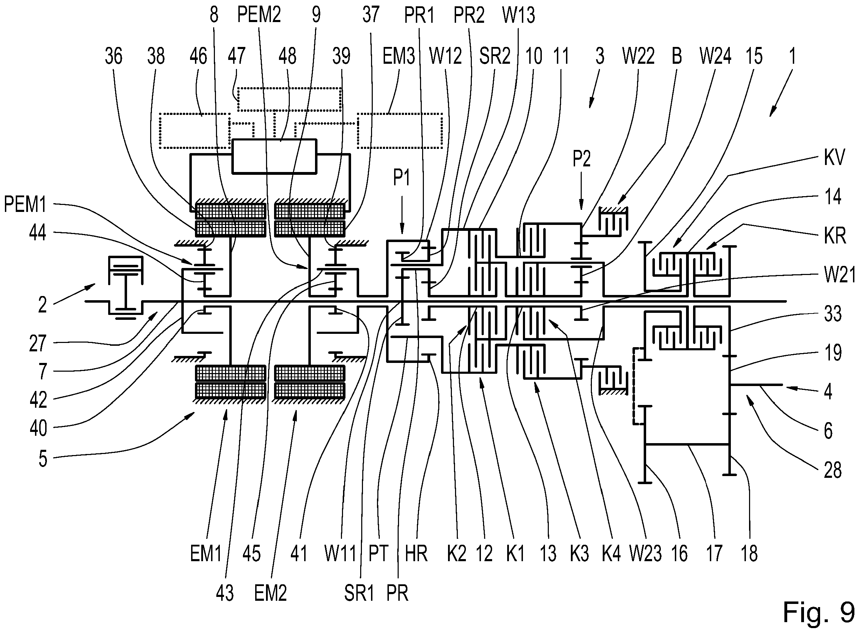

Das in Fig. 9 gezeigte weitere Ausführungsbeispiel des Fahrzeugantriebsstranges 1 unterscheidet sich von dem in Fig. 8 gezeigten Ausführungsbeispiel des Fahrzeugantriebsstranges 1 lediglich im Bereich der Anbindung der beiden elektrischen Maschinen EM1 und EM2 des Variators 5 an die Getriebeeingangswelle 7 und an die zweite Welle W12 des ersten Planetenradsatzes P1. Dabei sind die beiden elektrischen Maschinen EM1 und EM2 jeweils über einen Planetenradsatz PEM1 bzw. PEM2 mit der Getriebeeingangswelle 7 bzw. mit der zweiten Welle W12 des ersten Planetenradsatzes P1 wirkverbunden, die radial innerhalb der elektrischen Maschinen EM1 und EM2 bauraumneutral anordenbar sind. Die beiden Planetenradsätze PEM1 und PEM2 sind als einfache Planetengetriebe ausgebildet und umfassen jeweils ein gehäusefestes Hohlrad 38 bzw. 39, ein mit dem Rotor 36 bzw. 37 drehfest verbundenes Sonnenrad 40 bzw. 41 sowie jeweils einen Planetenträger 42 bzw. 43. Der der ersten elektrischen Maschine EM1 zugeordnete Planetenradsatz PEM1 ist über den Planetenträger 42 mit der Getriebeeingangswelle 7 drehfest verbunden. Der der zweiten elektrischen Maschine EM2 zugeordnete Planetenradsatz PEM2 steht über seinen Planetenträger 43 mit der zweiten Welle W12 des ersten Planetenradsatzes P1 in Wirkverbindung.

Die Anbindung der beiden elektrischen Maschinen EM1 und EM2 über die Planetenradsätze PEM1 bzw. PEM2 bietet im Vergleich zu der in Fig. 8 dargestellten direkten Anbindung an die Getriebeeingangswelle 7 bzw. die zweite Welle W12 des ersten Planetenradsatzes P1 die Möglichkeit, die elektrischen Maschinen EM1 und EM2 mit höherem Wirkungsgrad zu betreiben, da diese aufgrund der Übersetzung der Planetenradsätze PEM1 und PEM2 bei gleichen Antriebsdrehzahlen der Antriebsmaschine 2 mit höheren Drehzahlen betrieben werden können. Dies bietet den Vorteil, dass die elektrischen Maschinen EM1 und EM2 dann im Vergleich zur direkten Anbindung ein geringeres Drehmoment erzeugen müssen und daher bauraumgünstiger ausführbar sind.

Des Weiteren ist die erste elektrische Maschine EM1 im Betrieb des Fahrzeugantriebsstranges 1 während eines stationären Betriebes der Antriebsmaschine 2, beispielsweise mit einer Drehzahl gleich 2000 1/min, mit einer konstanten Drehzahl betreibbar, die bei entsprechender Übersetzung des Planetenradsatzes PEM1 beispielsweise etwa 6000 1/min ist. Im Unterschied hierzu wird die Drehzahl der zweiten elektrischen Maschine EM2 bei dem letztbeschriebenen Zahlenbeispiel dann zwischen einer ersten Drehzahl, beispielsweise -6000 1/min, und einer zweiten Drehzahl, beispielsweise +6000 1/min, stufenlos variiert. Dadurch ist die Gesamtübersetzung des Leistungsverzweigungsgetriebes 3 innerhalb des jeweils eingelegten Fahrbereiches bei gleichzeitig hohem Wirkungsgrad der elektrischen Maschinen EM1 und EM2 in gewünschtem Umfang stufenlos veränderbar.

Der elektrische Variator 5 ist im Vergleich zu einem hydraulischen Variator mit höherem Wirkungsgrad betreibbar, jedoch ist der elektrische Variator 5 durch eine geringere Leistungsdichte gekennzeichnet und verursacht gegenwärtig höhere Herstellkosten als der Einsatz eines hydraulischen Variators.

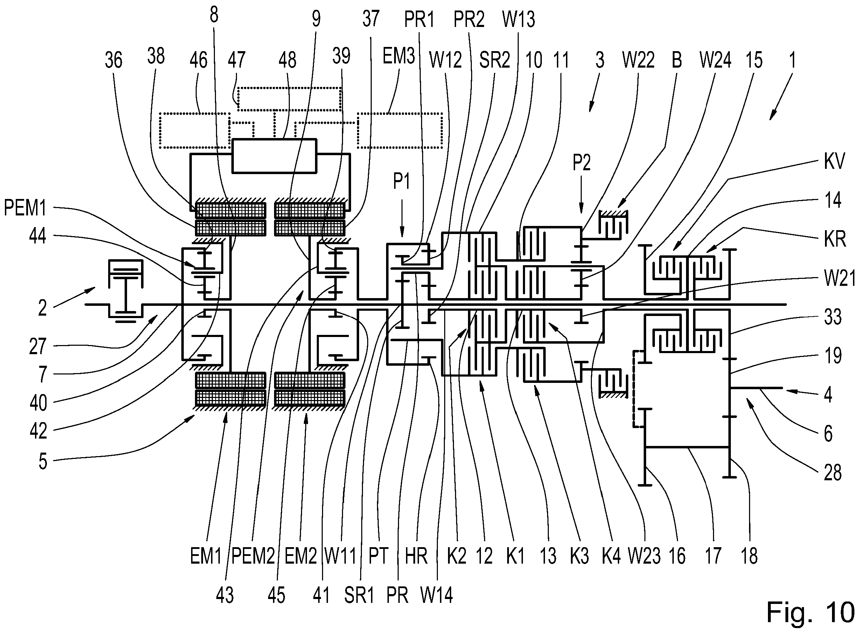

Ein weiteres Ausführungsbeispiel des Fahrzeugantriebsstranges 1 ist in Fig. 10 dargestellt. Dieses Ausführungsbeispiel unterscheidet sich von dem in Fig. 9 gezeigten Ausführungsbeispiel des Fahrzeugantriebsstranges 1 lediglich in der Ausführung der beiden Planetenradsätze PEM1 und PEM2 und deren Ankopplung an die Rotoren 36 und 37 der beiden elektrischen Maschinen EM1 und EM2 sowie an die Getriebeeingangswelle 7 bzw. an die zweite Welle W12 des ersten Planetenradsatzes P1. Die Planetenradsätze PEM1 und PEM2 sind wiederum bauraumgünstig radial innerhalb der elektrischen Maschinen EM1 und EM2 angeordnet. Die Getriebeeingangswelle 7 ist mit dem Hohlrad 38 des der ersten elektrischen Maschine EM1 zugeordneten Planetenradsatzes PEM1 verbunden, während der Rotor 36 mit dem Sonnenrad 40 drehfest gekoppelt ist. Der Planetenträger 42 des Planetenradsatzes PEM1 ist gehäuseseitig festgelegt. Gleichzeitig ist auch der Planetenträger 43 des der zweiten elektrischen Maschine EM2 zugeordneten Planetenradsatzes PEM2 gehäusefest ausgebildet. Der Rotor 37 der zweiten elektrischen Maschine EM2 ist drehfest mit dem Sonnenrad 41 des Planetenradsatzes PEM2 verbunden, während das Hohlrad 39 des Planetenradsatzes PEM2 mit der zweiten Welle W12 des ersten Planetenradsatzes P1 gekoppelt ist.

Bei dieser Ausführung der beiden Planetenradsätze PEM1 und PEM2 greifen im Betrieb des Fahrzeugantriebsstranges 1 an den auf den Planetenträgern 42 und 43 drehbar angeordneten Planetenrädern 44 bzw. 45 keine Fliehkräfte an. Im Vergleich zu der Ausführung des Fahrzeugantriebsstranges 1 gemäß Fig. 9 ist die Übersetzung zwischen der Getriebeeingangswelle 7 und der ersten elektrischen Maschine EM1 sowie zwischen der zweiten elektrischen Maschine EM2 und der zweiten Welle W12 des ersten Planetenradsatzes P1 negativ. Auch ist die Verschachtelung der Planetenradsätze PEM1 und PEM2 der Ausführung gemäß Fig. 10 im Vergleich zu der Ausführung der Planetenradsätze PEM1 und PEM2 gemäß Fig. 9 nur mit höherem Aufwand radial innerhalb der elektrischen Maschinen EM1 und EM2 realisierbar.

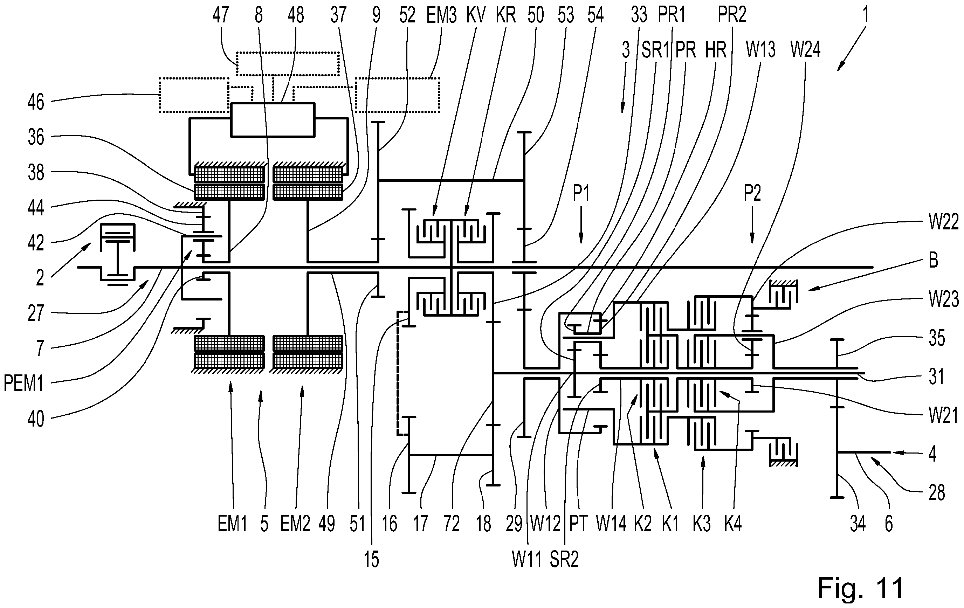

Ein weiteres Ausführungsbeispiel des Fahrzeugantriebsstranges 1 zeigt Fig. 11, bei dem die Fahrtrichtungskupplungen KV und KR, der erste Planetenradsatz P1, die Schaltelemente K1 bis K4 und B und der zweite Planetenradsatz P2 in dem zu Fig. 6 beschriebenen Umfang angeordnet sind, während der elektrische Variator 5 in dem zu Fig. 9 und Fig. 10 beschriebenen Umfang getriebeeingangsseitig positioniert ist. Dabei ist die erste elektrische Maschine EM1 wiederum über den Planetenradsatz PEM1 mit der Getriebeeingangswelle 7 gekoppelt, der den gleichen Aufbau wie der Planetenradsatz PEM1 gemäß Fig. 9 aufweist. Die zweite elektrische Maschine EM2 ist über eine drehbar auf der Getriebeeingangswelle 7 angeordnete Hohlwelle 49 sowie eine Vorgelegewelle 50 mit der zweiten Welle W12 des ersten Planetenradsatzes P1 wirkverbunden. Dabei kämmt ein Festrad 51 der Hohlwelle 49 mit einem Festrad 52 der Vorgelegewelle 50. Ein weiteres Festrad 53 der Vorgelegewelle 50 steht wiederum in Eingriff mit einem auf der Getriebeeingangswelle 7 drehbar angeordneten Losrad 54. Das Losrad 54 kämmt mit dem Zahnrad 29, das mit der zweiten Welle W12 des ersten Planetenradsatzes P1 drehfest verbunden ist.

Aufgrund der getriebeeingangsseitigen Anordnung der Fahrtrichtungskupplungen KV und KR sind diese wiederum kleiner dimensionierbar als bei einer getriebeausgangsseitigen Anordnung der Fahrtrichtungskupplungen KV und KR. Zusätzlich ist die zweite elektrische Maschine EM2 bei der in Fig. 11 gezeigten Ausführungsform lediglich über Stirnradstufen mit dem ersten Planetenradsatz P1 wirkverbunden. Diese Anbindung der zweiten elektrischen Maschine EM2 bietet den Vorteil, die zweite elektrische Maschine EM2 ohne ein zusätzliches Planetengetriebe in ihrem wirkungsgradgünstigen Betriebsbereich betreiben zu können.

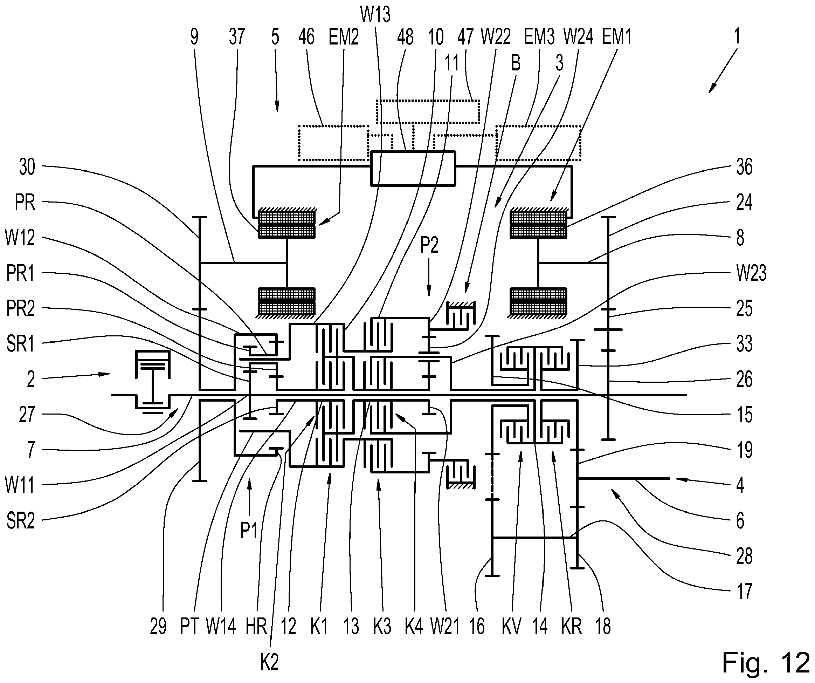

Die elektrischen Maschinen EM1 und EM2 des elektrischen Variators 5 sind bei dem in Fig. 12 dargestellten Ausführungsbeispiel des Fahrzeugantriebsstranges 1 an der gleichen Stelle wie der Variator 5 des Fahrzeugantriebsstranges 1 gemäß Fig. 1 angeordnet. Des Weiteren sind die elektrischen Maschinen EM1 und EM2 des Variators 5 gemäß Fig. 12 im Vergleich zu den elektrischen Maschinen EM1 und EM2 gemäß Fig. 9 bis Fig. 11 in axialer Richtung länger und mit geringerem Durchmesser ausgebildet, womit der radiale Bauraumbedarf des Leistungsverzweigungsgetriebes 3 gemäß Fig. 12 begrenzt ist.

Bei der Ausführung des Fahrzeugantriebsstranges gemäß Fig. 12 besteht die Möglichkeit, beispielsweise Pumpen einer Arbeitshydraulik und/oder einer Fahrzeuglenkung über ein nahe einer Gehäusewand angeordnetes Zahnrad, wie das Festrad 24 oder das Festrad 30 auf konstruktiv einfache Weise anzutreiben. Des Weiteren ist die Anbindung der elektrischen Maschinen EM1 und EM2 des elektrischen Variators 5 über die Festräder 26, 24 und 29, 30 kostengünstiger und die elektrischen Maschinen EM1 und EM2 sind dann auch mit höherem mechanischen Wirkungsgrad betreibbar als bei der Anbindung über die Planetenradsätze PEM1 und PEM2.

Im Unterschied dazu ist die Leistungsdichte der bei den Ausführungsbeispielen gemäß Fig. 9, Fig. 10 und Fig. 11 verwendeten elektrischen Maschinen EM1 und EM2, die auch als Scheibenmaschinen bezeichnet werden, höher als die Leistungsdichte der im Vergleich dazu axial länger und radial schlanker ausgeführten elektrischen Maschinen EM1 und EM2 gemäß Fig. 12.

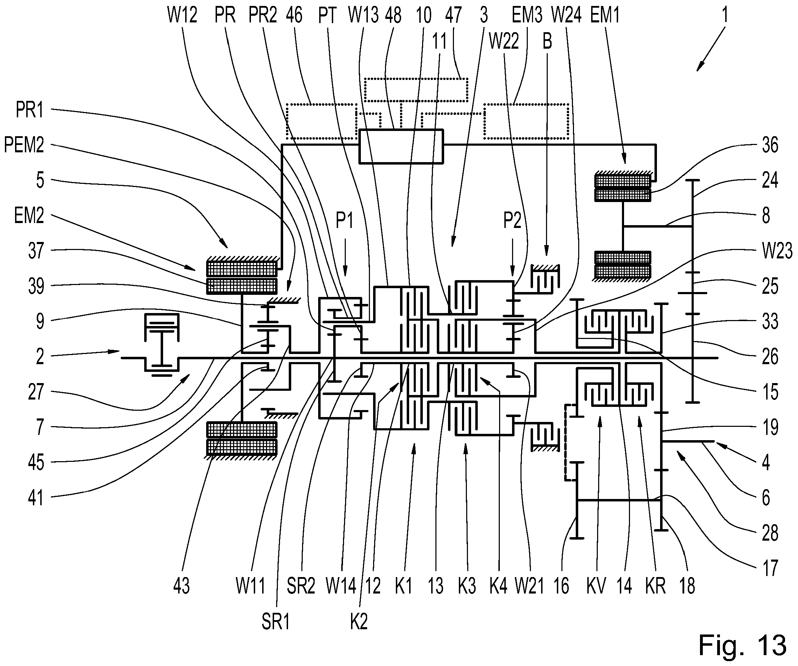

Bei der in Fig. 13 dargestellten Ausführungsform des Fahrzeugantriebsstranges 1 ist die zweite elektrische Maschine EM2 des elektrischen Variators 5 in dem zu Fig. 9 beschriebenen Umfang angeordnet und mit der zweiten Welle W12 des ersten Planetenradsatzes P1 über den Planetenradsatz PEM2 angebunden. Die erste elektrische Maschine EM1 des elektrischen Variators 5 ist in dem zu Fig. 12 beschriebenen Umfang angeordnet und in gleichem Umfang wie die zweite elektrische Maschine EM2 gemäß Fig. 12 mit der Getriebeeingangswelle 7 wirkverbunden.

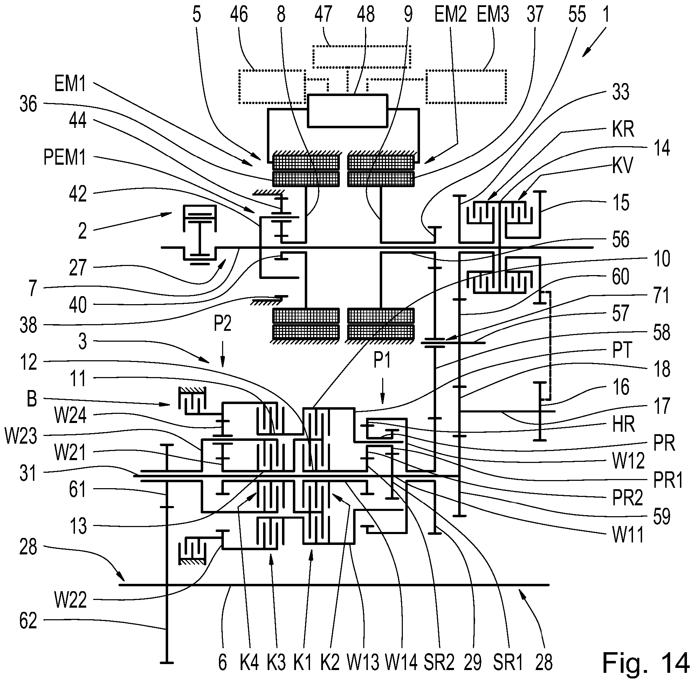

Ein in axialer Richtung durch einen geringen Bauraumbedarf gekennzeichnetes Ausführungsbeispiel zeigt Fig. 14. Dabei sind die beiden elektrischen Maschinen EM1 und EM2 sowie die Fahrtrichtungskupplungen KV und KR koaxial zueinander und auf der Getriebeeingangswelle 7 angeordnet. Der erste Planetenradsatz P1 und der zweite Planetenradsatz P2 sowie die Schaltelemente K1 bis K4 und B sind auf der radial zur Getriebeeingangswelle 7 beabstandeten Vorgelegewelle 31 angeordnet und im Wesentlichen radial neben dem elektrischen Variator 5 positioniert. Die erste elektrische Maschine EM1 steht mit der Getriebeeingangswelle 7 über einen zu

Fig. 9 näher beschriebenen Planetenradsatz PEM1 in Wirkverbindung. Die zweite elektrische Maschine EM2 ist über eine Zahnradkette 71 mit der zweiten Welle W12 des ersten Planetenradsatzes P1 gekoppelt. Die Zahnradkette 71 umfasst vorliegend ein Festrad 55 einer mit dem Rotor 37 der zweiten elektrischen Maschine EM2 verbundenen Hohlwelle 56, die drehbar auf der Getriebeeingangswelle 7 gelagert ist. Das Festrad 55 kämmt mit einem auf einer weiteren Vorgelegewelle 57 drehbar gelagerten Losrad 58, das wiederum mit dem Festrad 29 in Eingriff steht.

Zusätzlich ist die Getriebeeingangswelle 7 über die Fahrtrichtungskupplung KV drehfest mit dem Losrad 15 verbindbar, das mit dem Festrad 16 der Vorgelegewelle 17 kämmt. Das weitere Festrad 18 der Vorgelegewelle 17 steht mit einem Festrad 59 der Vorgelegewelle 31 in Eingriff, so dass ein an der Getriebeeingangswelle 7 anliegendes Drehmoment über die Fahrtrichtungskupplung KV und die Zahnräder 15, 16, 18 und 59 aufweisende Räderkette auf die Vorgelegewelle 31 übertragbar ist.

Soll das mit dem Fahrzeugantriebsstrang 1 gemäß Fig. 14 ausgeführte Fahrzeug in Rückwärtsfahrtrichtung betrieben werden, ist in vorbeschriebenem Umfang die Fahrtrichtungskupplung KR zu schließen und die Fahrtrichtungskupplung KV zu öffnen. In einem solchen Betriebszustand der Fahrtrichtungskupplungen KV und KR ist das Losrad 33 über die Fahrtrichtungskupplung KR mit der Getriebeeingangswelle 7 verbunden. Das Losrad 33 kämmt mit einem Festrad 60 der weiteren Vorgelegewelle 57, das wiederum in Eingriff mit dem weiteren Festrad 18 der Vorgelegewelle 17 steht. Das weitere Festrad 18 kämmt wie bereits erläutert mit dem Festrad 59 der Vorgelegewelle 31. Die dritte Welle W23 des zweiten Planetenradsatzes P2 steht vorliegend über ein Festrad 61 und ein Festrad 62 der ebenfalls als Vorgelegewelle ausgeführten Getriebeausgangswelle 6 mit der Getriebeausgangswelle 6 in Wirkverbindung.

In Abhängigkeit des jeweils vorliegenden Anwendungsfalles besteht auch die Möglichkeit, dass die Getriebeausgangswelle 6 über weitere Zahnradstufen mit einer oder mit mehreren antreibbaren Fahrzeugachsen in Wirkverbindung steht bzw. in Wirkverbindung bringbar ist.

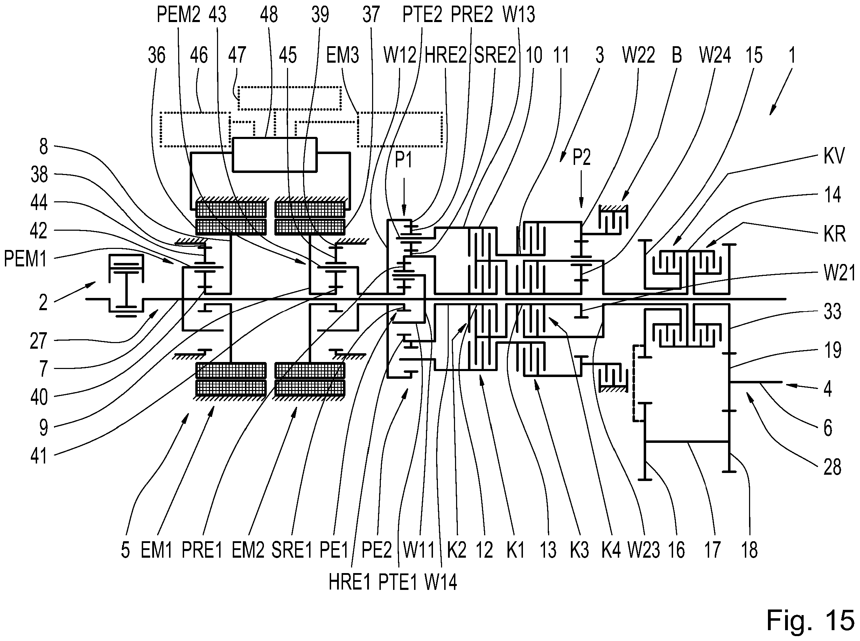

Der in Fig. 15 dargestellte Fahrzeugantriebsstrang 1 weist einen im Wesentlichen Fig. 9 entsprechenden Aufbau auf, wobei der erste Planetenradsatz P1 im Unterschied dazu die beiden einfachen Planetengetriebe PE1 und PE2 umfasst. Bei der Ausführung des Leistungsverzweigungsgetriebes 3 gemäß Fig. 15 ist das erste einfache Planetengetriebe PE1 radial innerhalb des zweiten einfachen Planetengetriebes PE2 angeordnet, womit das Leistungsverzweigungsgetriebe 3 gemäß Fig. 15 in axialer Richtung einen geringeren Bauraumbedarf aufweist als das Leistungsverzweigungsgetriebe 3 gemäß Fig. 5A. Da das Sonnenrad SRE2 des zweiten einfachen Planetengetriebes PE2 und das Hohlrad HRE1 des ersten einfachen Planetengetriebes PE1 einstückig ausbildbar sind, ist das Leistungsverzweigungsgetriebe 3 gemäß Fig. 15 im Vergleich zum Leistungsverzweigungsgetriebe 3 gemäß Fig. 5A aufgrund einer geringeren Teileanzahl konstruktiv einfacher und kostengünstiger ausführbar.

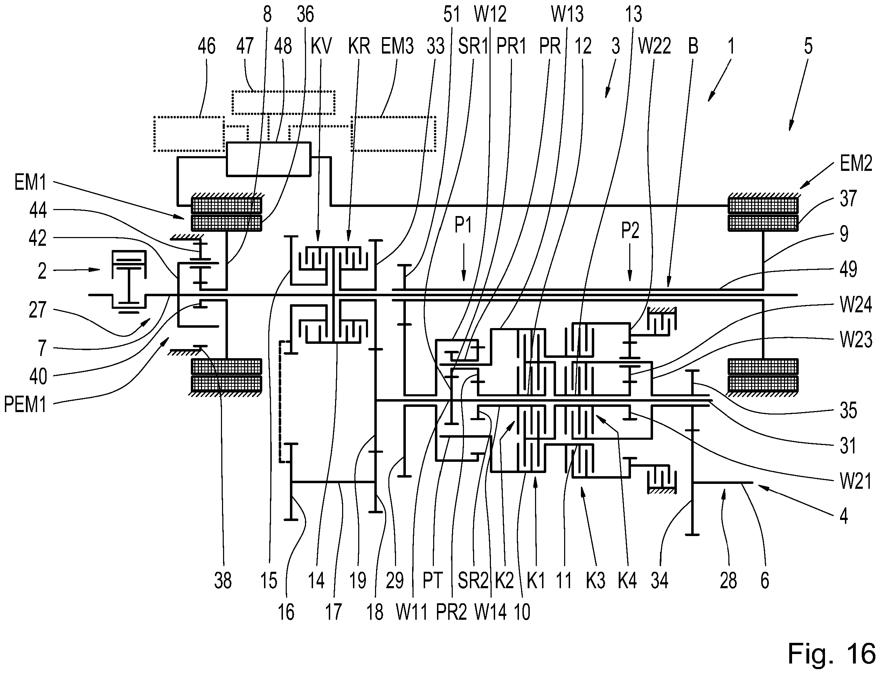

Fig. 16 zeigt ein weiteres Ausführungsbeispiel des Fahrzeugantriebsstranges 1, das in wesentlichem Umfang dem in Fig. 11 gezeigten Fahrzeugantriebsstrang 1 entspricht. Bei dem Fahrzeugantriebsstrang 1 gemäß Fig. 16 sind die Fahrtrichtungskupplungen KV und KR sowie die beiden Planetenradsätze P1 und P2 zusammen mit den Schaltelementen K1 bis K4 und B in axialer Richtung zwischen den beiden elektrischen Maschinen EM1 und EM2 angeordnet, die koaxial zur Getriebeeingangswelle 7 angeordnet sind. Dabei ist die erste elektrische Maschine EM1 zwischen der Antriebsmaschine 2 und den beiden Fahrtrichtungskupplungen KV und KR angeordnet, während die auf der Vorgelegewelle 31 koaxial angeordneten Planetenradsätze P1 und P2 sowie die Schaltelemente K1 bis K4 und B in axialer Richtung zwischen den beiden Fahrtrichtungskupplungen KV und KR und der zweiten elektrischen Maschine EM2 positioniert sind.

Die zweite elektrische Maschine EM2 ist in axialer Richtung auf der der Antriebsmaschine 2 abgewandten Seite des zweiten Planetenradsatzes P2 angeordnet. Im Vergleich zu der Ausführung des Fahrzeugantriebsstranges 1 gemäß Fig. 11 wird durch die mit hohem axialem Abstand zueinander angeordneten elektrischen Maschinen EM1 und EM2 des elektrischen Variators 5 eine gegenseitige Beeinflussung der Magnetfelder der beiden elektrischen Maschinen EM1 und EM2 vermieden. Des Weiteren ist die zweite elektrische Maschine EM2 im Vergleich zu der Ausführung des Leistungsverzweigungsgetriebes 3 gemäß Fig. 11 über eine geringere Anzahl an Zahneingriffen mit der zweiten Welle W12 des ersten Planetenradsatzes P1 gekoppelt und daher das Leistungsverzweigungsgetriebe 3 mit höherem Wirkungsgrad betreibbar.

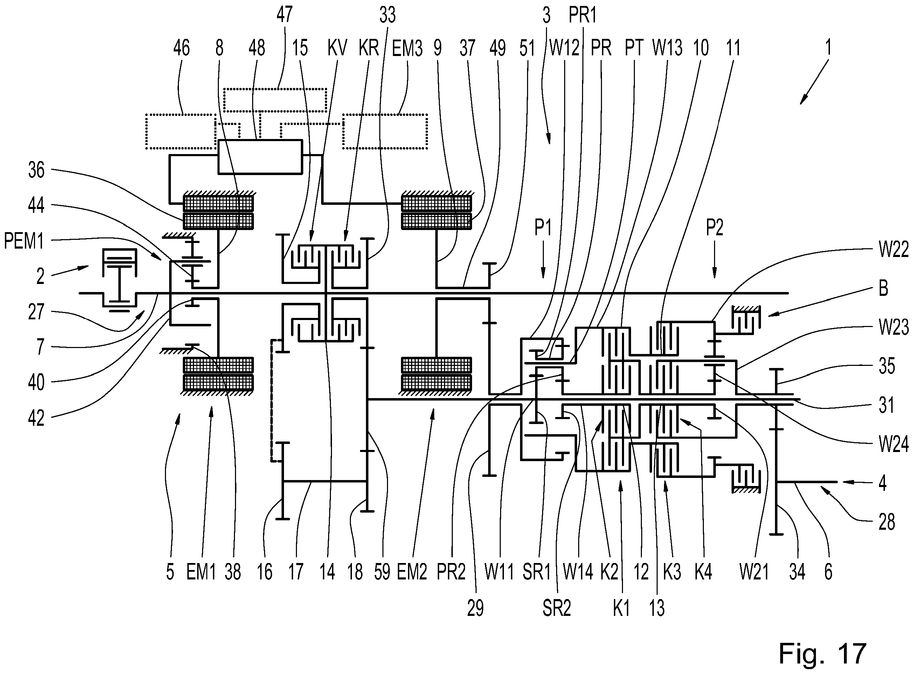

Bei dem in Fig. 17 gezeigten Fahrzeugantriebsstrang 1, der im Wesentlichen dem Fahrzeugantriebsstrang 1 gemäß Fig. 16 entspricht, ist die zweite elektrische Maschine EM2 in axialer Richtung zwischen den Fahrtrichtungskupplungen KV und KR und dem ersten Planetenradsatz P1 koaxial zur Getriebeeingangswelle 7 angeordnet. Bei dieser Ausführungsform des Leistungsverzweigungsgetriebes 3 ist die Hohlwelle 49 wesentlich kürzer als bei dem in Fig. 16 dargestellten Ausführungsbeispiel des Leistungsverzweigungsgetriebes 3 ausführbar.

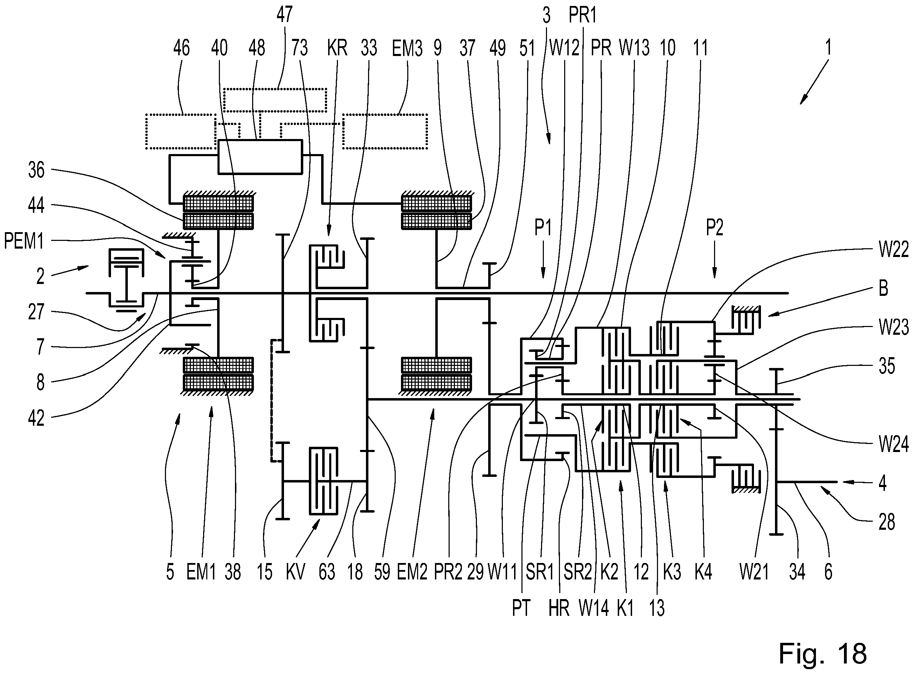

Eine Fig. 17 im Wesentlichen entsprechende Ausführungsform des Fahrzeugantriebsstranges 1 zeigt Fig. 18. Bei dem Fahrzeugantriebsstrang 1 gemäß Fig. 18 sind die Fahrtrichtungskupplungen KV und KR radial zueinander versetzt und in axialer Richtung in einer gemeinsamen Ebene des Leistungsverzweigungsgetriebes 3 angeordnet. Dabei ist die Fahrtrichtungskupplung KR koaxial zur Getriebeeingangswelle 7 angeordnet, während die Fahrtrichtungskupplung KV auf einer radial zur Getriebeeingangswelle 7 und der Vorgelegewelle 31 beabstandeten Vorgelegewelle 63 angeordnet ist.

Das gemeinsam mit der Fahrtrichtungskupplung KR für Rückwärtsfahrt auf der Getriebeeingangswelle 7 angeordnete Losrad 33 ist in geschlossenem Zustand der Fahrtrichtungskupplung KR drehfest mit der Getriebeeingangswelle 7 verbunden und kämmt mit dem Festrad 59 der Vorgelegewelle 31. Das der Fahrtrichtungskupplung KV für Vorwärtsfahrt zugeordnete Losrad 15 ist in geschlossenem Betriebszustand der Fahrtrichtungskupplung KV mit dem Festrad 18 drehfest verbunden, dass ebenfalls mit dem Festrad 59 der Vorgelegewelle in Eingriff steht. Das Losrad 15 kämmt mit einem Festrad 73 der Getriebeeingangswelle 7.

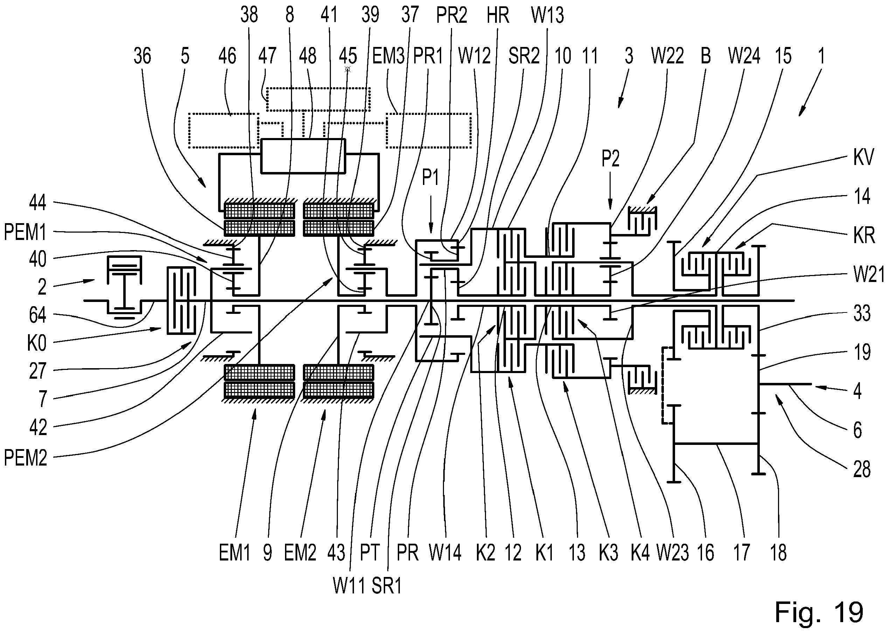

Eine gegenüber der in Fig. 9 dargestellten Ausführungsform des Fahrzeugantriebsstranges 1 um ein weiteres Schaltelement K0 des Leistungsverzweigungsgetriebes 3 erweiterte Ausführungsform des Fahrzeugantriebsstranges 1 zeigt Fig. 19. Dabei ist das weitere Schaltelement K0 zwischen einer Motorausgangswelle 64 der Antriebsmaschine 2 und der Getriebeeingangswelle 7 angeordnet, so dass die Antriebsmaschine 2 in geöffnetem Betriebszustand des Schaltelementes K0 von der Getriebeeingangswelle 7 entkoppelt ist.

Zusätzlich besteht die Möglichkeit, das Schaltelement K0 und den Planetenradsatz PEM1 wiederum bauraumgünstig radial innerhalb der ersten elektrischen Maschine EM1 des Variators 5 anzuordnen.

Das zusätzliche Schaltelement K0 bietet die Möglichkeit, einen emissionsfreien rein elektrischen Fahrbetrieb eines mit dem Fahrzeugantriebsstrang 1 gemäß Fig. 19 ausgeführten Fahrzeuges bei gleichzeitig abgeschalteter Antriebsmaschine 2 mit möglichst geringen Verlusten durchführen zu können. Dies resultiert aus der Tatsache, dass im Bereich der abgeschalteten Antriebsmaschine 2 auftretende Schleppmomente bei geöffnetem zusätzlichem Schaltelement K0 nicht im Bereich der Getriebeeingangswelle 7 anliegen. Des Weiteren besteht auch die Möglichkeit, eine mit der Getriebeeingangswelle 7 in Wirkverbindung stehende Zapfwelle mit hohem Wirkungsgrad ohne Emissionen seitens der Antriebsmaschine 2 rein elektrisch anzutreiben. Die für den rein elektrischen Antrieb des Fahrzeuges und/oder der Zapfwelle erforderliche elektrische Energie kann wiederum über einen fahrzeugseitigen elektrischen Speicher oder eine externe Stromquelle, wie ein externes Stromnetz, zur Verfügung gestellt werden.

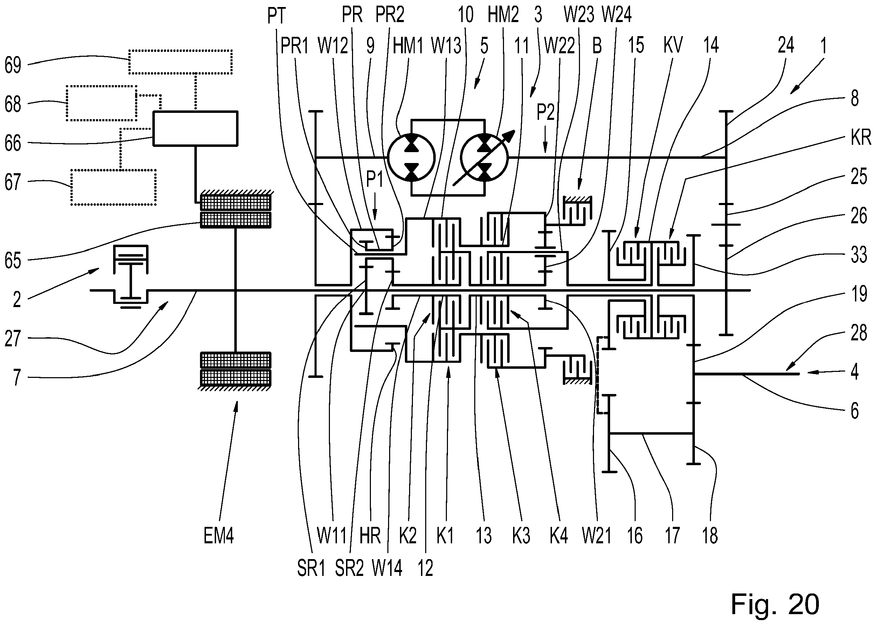

Ein weiteres Ausführungsbeispiel des Fahrzeugantriebsstranges 1 zeigt Fig. 20, das dem in Fig. 1 dargestellten Ausführungsbeispiel des Fahrzeugantriebsstranges 1 entspricht und zusätzlich mit einer weiteren elektrischen Maschine EM4 ausgebildet ist. Die weitere elektrische Maschine EM4 ist im Bereich des Getriebeeingangs 27 angeordnet. Ein Rotor 65 der weiteren elektrischen Maschine EM4 ist direkt mit der Getriebeeingangswelle 7 verbunden. Der weiteren elektrischen Maschine EM4 ist eine Regelung und Steuerung 66 zugeordnet, über die wiederum weitere elektrische Verbraucher 67, wie eine zusätzliche elektrische Maschine, eine elektrische Speichereinrichtung 68 und/oder ein Bordnetz 69 ausgehend von der weiteren elektrischen Maschine EM4 mit elektrischer Energie beaufschlagbar sind.

Des Weiteren besteht auch die Möglichkeit, dass von der elektrischen Speichereinrichtung 68 oder von einer mit dem Fahrzeug verbundenen externen Stromquelle über die Regelung und Steuerung 66 der weiteren elektrischen Maschine EM4 elektrische Energie zur Verfügung gestellt wird. Dann ist die weitere elektrische Maschine EM4 motorisch betreibbar und während definierter Betriebszustandsverläufe des Fahrzeugantriebsstranges 1 sowohl von der Antriebsmaschine 2 als auch von der elektrischen Maschine EM4 Drehmoment in den Fahrzeugantriebsstrang 1 für einen Fahrantrieb und/oder für den Antrieb einer mit der Getriebeeingangswelle 7 wirkverbundenen Zapfwelle einleitbar.

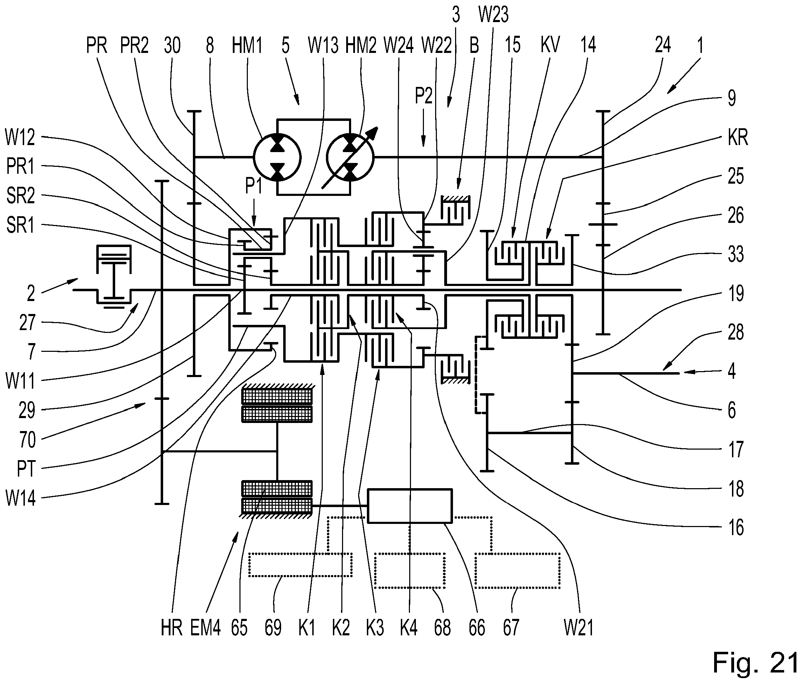

Bei dem in Fig. 21 dargestellten weiteren Ausführungsbeispiel des Fahrzeugantriebsstranges 1 ist die weitere elektrische Maschine EM4 radial zur Getriebeeingangswelle 7 beabstandet angeordnet und mit der Getriebeeingangswelle 7 über eine Stirnradstufe 70 verbunden. Dabei ist die weitere elektrische Maschine EM4 in radialer Richtung bauraumgünstiger als bei der Ausführung des Leistungsverzweigungsgetriebes 3 gemäß Fig. 20 ausgebildet. Im Unterschied zu der Ausführungsform der weiteren elektrischen Maschine EM4 gemäß Fig. 20 ist die weitere elektrische Maschine EM4 gemäß Fig. 21 mit einer größeren axialen Länge ausgebildet.

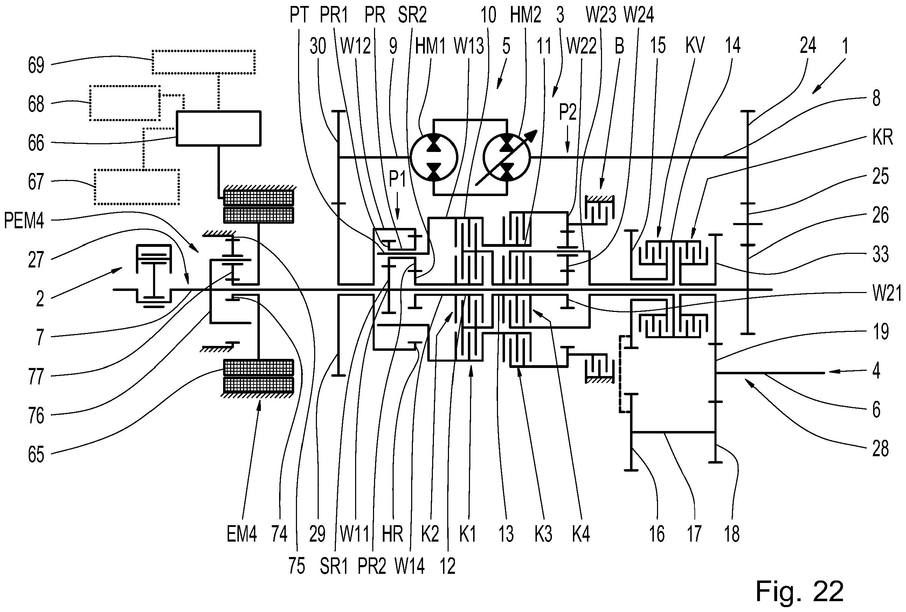

Eine Weiterbildung des in Fig. 20 dargestellten Fahrzeugantriebsstranges 1 zeigt Fig. 22, bei dem die weitere elektrische Maschine EM4 über einen Planetenradsatz PEM4 mit der Getriebeeingangswelle 7 wirkverbunden ist. Dabei weist der Planetenradsatz PEM4 den gleichen Aufbau wie die Planetenradsätze PEM1 und PEM2 gemäß Fig. 9 auf. Der Rotor 65 der weiteren elektrischen Maschine EM4 ist mit einem Sonnenrad 74 des Planetenradsatzes PEM4 verbunden. Ein Hohlrad 75 des Planetenradsatzes PEM4 ist gehäusefest ausgebildet, während die Getriebeeingangswelle 7 mit einem Planetenträger 76 des Planetenradsatzes PEM4 in Wirkverbindung steht, auf dem Planetenräder 77 des Planetenradsatzes PEM4 drehbar angeordnet sind.

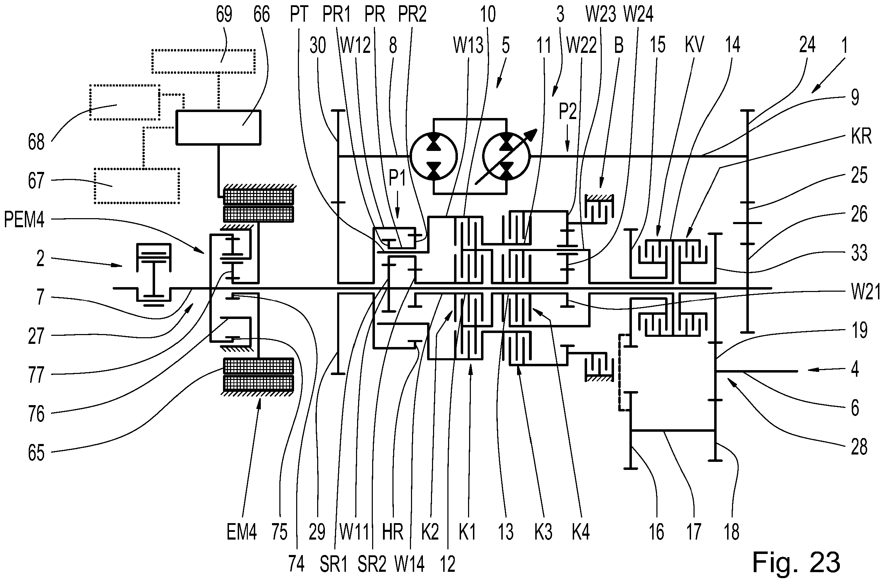

Im Unterschied hierzu ist die weitere elektrische Maschine EM4 bei dem in Fig. 23 gezeigten weiteren Ausführungsbeispiel des Fahrzeugantriebsstranges 1 über einen Planetenradsatz PEM4 mit der Getriebeeingangswelle 7 wirkverbunden, der den gleichen Aufbau wie die Planetenradsätze PEM1 und PEM2 gemäß Fig. 10 hat. Der Rotor 65 der weiteren elektrischen Maschine EM4 ist wiederum mit dem Sonnenrad 74 des Planetenradsatzes PEM4 gekoppelt. Das Hohlrad 75 des Planetenradsatzes PEM4 ist mit der Getriebeeingangswelle 7 verbunden. Der Planetenträger 76 des Planetenradsatzes PEM4 ist gehäusefest ausgebildet.

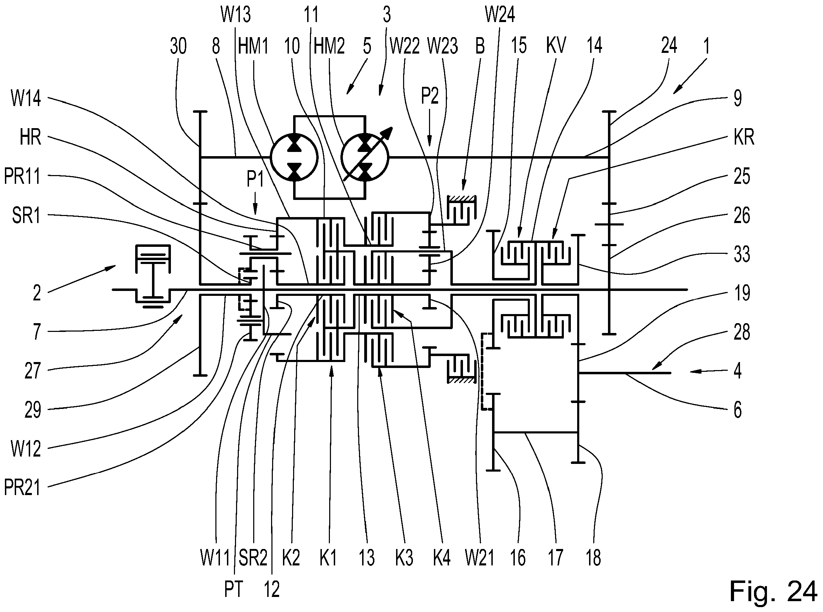

Fig. 24 zeigt ein weiteres Ausführungsbeispiel des Fahrzeugantriebsstranges 1, das sich lediglich im Bereich des ersten Planetenradsatzes P1 von der in Fig. 1 gezeigten ersten Ausführungsform des Fahrzeugantriebsstranges 1 unterscheidet. Der erste Planetenradsatz P1 des Fahrzeugantriebsstranges 1 gemäß Fig. 24 ist mit einem Ravigneaux-Radsatz ausgeführt. Dabei ist die erste Welle W11 des ersten Planetenradsatzes P1 mit einem Planetenträger PT des Ravigneaux-Radsatzes wirkverbunden. Die zweite Welle W12 des ersten Planetenradsatzes P1 ist mit einem Sonnenrad SR1 des Ravigneaux-Radsatzes gekoppelt, während die dritte Welle W13 des ersten Planetenradsatzes P1 mit einem Hohlrad HR des Ravigneaux-Radsatzes verbunden ist. Die vierte Welle W14 des ersten Planetenradsatzes P1 steht mit einem weiteren Sonnenrad SR2 des Ravigneaux-Radsatzes in Wirkverbindung. Das Sonnenrad SR1 ist mit einem kleineren Durchmesser als das weitere Sonnenrad SR2 ausgebildet.

Auf dem Planetenträger PT sind insgesamt sechs Planetenräder PR11 und PR21 drehbar angeordnet. Drei Planetenräder PR11 sind vorliegend mit einer größeren axialen Länge als drei weitere Planetenräder PR21 ausgeführt. Dabei kämmen die längeren Planetenräder PR11 mit dem Hohlrad HR, dem weiteren Sonnenrad SR2 und den kürzeren Planetenrädern PR21. Die kürzeren Planetenräder PR21 stehen zusätzlich mit dem kleineren Sonnenrad SR1 in Eingriff.

Die Ausführung des ersten Planetenradsatzes P1 mit einem Ravigneaux-Radsatz bietet den Vorteil, dass das stufenlose Leistungsverzweigungsgetriebe 3 kostengünstig und mit geringem Bauraumbedarf ausführbar ist, da der Ravigneaux-Radsatz lediglich einen Steg bzw. einen Planetenträger PT und ein Hohlrad HR aufweist.

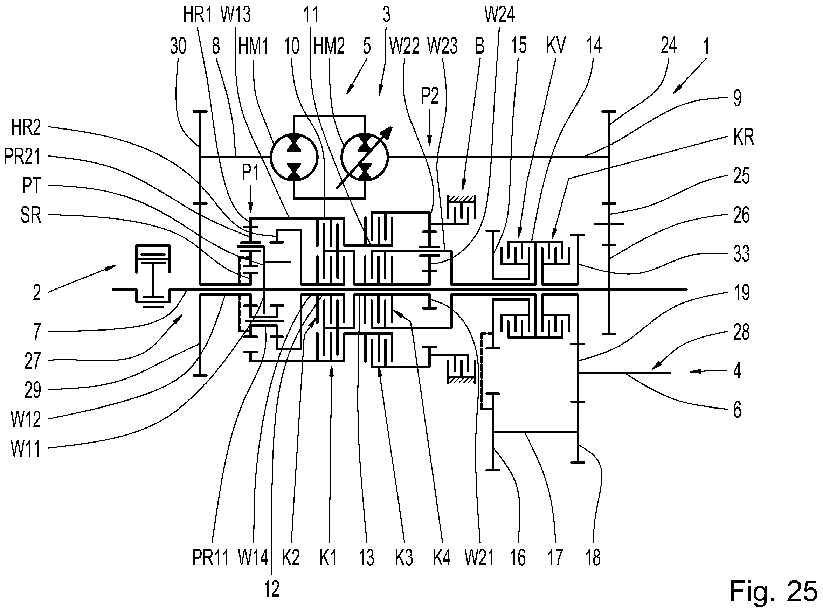

Eine weitere Ausführungsform des Fahrzeugantriebsstranges 1 zeigt Fig. 25, die mit einem kosten- und bauraumgünstigen Leistungsverzweigungsgetriebe 3 ausgebildet ist, das bis auf den ersten Planetenradsatz P1 im Wesentlichen den gleichen Aufbau wie das Leistungsverzweigungsgetriebe 3 gemäß Fig. 1 aufweist. Der erste Planetenradsatz P1 des Leistungsverzweigungsgetriebes 3 umfasst einen Planetenradsatz mit zwei Hohlrädern HR1 und HR2, mit einem Planetensteg PT und mit einem Sonnenrad SR.

Auf dem Planetenträger PT sind vorzugsweise insgesamt sechs Planetenräder PR11 und PR21 drehbar angeordnet. Drei Planetenräder PR11 sind vorliegend mit einer größeren axialen Länge als drei weitere Planetenräder PR21 ausgeführt. Dabei kämmen die längeren Planetenräder PR11 mit dem Hohlrad HR2, dem Sonnenrad SR und den kürzeren Planetenrädern PR21. Die kürzeren Planetenräder PR21 stehen zusätzlich mit dem weiteren Hohlrad HR1 in Eingriff. Dabei ist das Hohlrad HR2 mit einem kleinerem Durchmesser als das Hohlrad HR1 ausgeführt und radial vom größeren Hohlrad HR1 übergriffen.

Die erste Welle W11 des ersten Planetenradsatzes P1 ist mit dem Planetenträger PT verbunden, während die zweite Welle W12 des ersten Planetenradsatzes P1 mit dem Sonnenrad SR in Wirkverbindung steht. Des Weiteren ist die dritte Welle W13 des ersten Planetenradsatzes P1 mit dem größeren Hohlrad HR1 gekoppelt und die vierte Welle W14 des ersten Planetenradsatzes P1 mit dem kleineren Hohlrad HR2 verbunden.

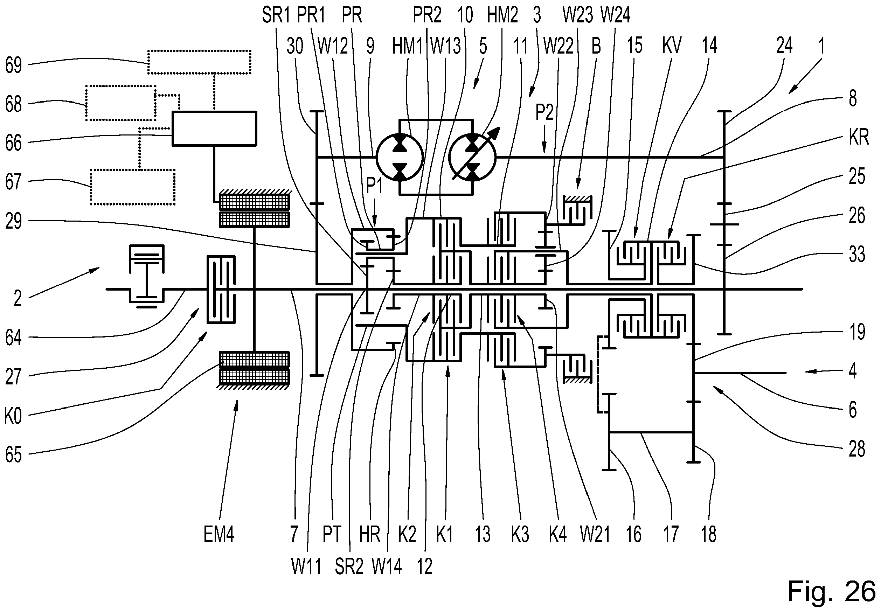

Der in Fig. 26 dargestellte Fahrzeugantriebsstrang 1 umfasst neben den Baugruppen des Fahrzeugantriebsstranges 1 gemäß Fig. 1 zusätzlich das Schaltelement K0 gemäß Fig. 19 und die weitere elektrische Maschine EM4 gemäß Fig. 20. Auch hier besteht wiederum die Möglichkeit, das Schaltelement K0 bauraumgünstig radial innerhalb der weiteren elektrischen Maschine EM4 anzuordnen.

Grundsätzlich sind alle in der Zeichnung dargestellten Ausführungsbeispiele des Fahrzeugantriebsstranges 1 bzw. deren stufenlose Leistungsverzweigungsgetriebe 3 mit einem ersten Planetenradsatz P1 ausführbar, der gemäß Fig. 1, Fig. 4, Fig. 5A, Fig. 5B, Fig. 24 oder Fig. 25 ausgebildet ist. Des Weiteren sind auch die Fahrtrichtungskupplungen KV und KR in Abhängigkeit des jeweils vorliegenden Anwendungsfalles bei allen beschriebenen Varianten des Fahrzeugantriebsstranges 1 getriebeeingangsseitig oder getriebeausgangsseitig anordenbar. Darüber hinaus sind auch alle Ausführungsbeispiele des Fahrzeugantriebsstranges 1 gemäß Fig. 1 bis Fig. 26 entweder mit einem hydraulischen oder mit einem elektrischen Variator ausbildbar.

Zusätzlich besteht auch die Möglichkeit, dass die verschiedenen Schaltelemente als form- und/oder reibschlüssige Schaltelemente, d.h. als Klauenschaltelemente, als Synchronisierungen oder als Lamellenkupplungen oder Lamellenbremsen ausgeführt werden. Zudem kann es auch vorgesehen sein, dass Wechsel zwischen den Fahrbereichen mit geringen Belastungen der Schaltelemente K1 bis K4 und B im Wesentlichen synchron durchgeführt werden.

Auch sind Reversiervorgänge eines mit einem der Fahrzeugantriebsstränge 1 ausgeführten Fahrzeuges durch entsprechendes Betätigen der beiden Fahrtrichtungskupplungen KV und KR unterstützbar bzw. durchführbar. Dabei wird noch darauf hingewiesen, dass die Wirkungsweise der beiden Fahrtrichtungskupplungen KV und KR in Abhängigkeit der jeweils gewählten Konfiguration des Fahrzeugantriebsstranges 1 auch von der vorbeschriebenen Wirkungsweise in dem Umfang abweichen kann, dass ein mit dem Fahrzeugantriebsstrang 1 ausgebildetes Fahrzeug bei geschlossener Fahrtrichtungskupplung KV in Rückwärtsfahrtrichtung und bei geschlossener Fahrtrichtungskupplung KR in Vorwärtsfahrtrichtung betrieben wird.

### Bezugszeichen

- 1: Fahrzeugantriebsstrang
- 2: Antriebsmaschine
- 3: stufenloses Leistungsverzweigungsgetriebe
- 4: Abtrieb
- 5: Variator
- 6: Getriebeausgangswelle
- 7: Getriebeeingangswelle
- 8: erste Welle des Variators
- 9: zweite Welle des Variators
- 10: Schaltelementhälfte des Schaltelementes K1
- 11: Schaltelementhälfte des Schaltelementes K3
- 12: Schaltelementhälfte des Schaltelementes K2
- 13: Schaltelementhälfte des Schaltelementes K4
- 14: Schaltelementhälfte der Fahrtrichtungskupplungen KV und KR
- 15: Losrad
- 16: Festrad der Vorgelegewelle 17
- 17: Vorgelegewelle
- 18: weiteres Festrad der Vorgelegewelle 17
- 19: Festrad der Getriebeausgangswelle
- 20: Kegelrad
- 21: weiteres Festrad der Getriebeausgangswelle
- 22: Losrad der weiteren Vorgelegewelle 23
- 23: weitere Vorgelegewelle
- 24: Festrad der ersten Welle des Variators
- 25: Zwischenrad
- 26: Festrad
- 27: Getriebeeingang
- 28: Getriebeausgang
- 29: Zahnrad
- 30: Festrad
- 31: Vorgelegewelle
- 32: Losrad
- 33: Losrad
- 34: Festrad
- 35: Festrad
- 36: Rotor der ersten elektrischen Maschine
- 37: Rotor der zweiten elektrischen Maschine
- 38: Hohlrad des Planetenradsatzes PEM1
- 39: Hohlrad des Planetenradsatzes PEM2
- 40: Sonnenrad des Planetenradsatzes PEM1
- 41: Sonnenrad des Planetenradsatzes PEM2
- 42: Planetenträger des Planetenradsatzes PEM1
- 43: Planetenträger des Planetenradsatzes PEM2
- 44: Planetenrad des Planetenradsatzes PEM1
- 45: Planetenrad des Planetenradsatzes PEM2
- 46: elektrischer Speicher
- 47: Bordnetz
- 48: Regelung und Steuerung
- 49: Hohlwelle
- 50: Vorgelegewelle
- 51: Festrad der Hohlwelle 49
- 52: Festrad der Vorgelegewelle 50
- 53: Festrad der Vorgelegewelle 50
- 54: Losrad
- 55: Festrad der Hohlwelle 56
- 56: Hohlwelle
- 57: weitere Vorgelegewelle
- 58: Losrad der weiteren Vorgelegewelle 57
- 59: Festrad der Vorgelegewelle 31
- 60: Festrad der weiteren Vorgelegewelle 57
- 61: Festrad der dritten Welle W23 des zweiten Planetenradsatzes P2
- 62: Festrad
- 63: Vorgelegewelle
- 64: Motorausgangswelle der Antriebsmaschine
- 65: Rotor der weiteren elektrischen Maschine EM4
- 66: Regelung und Steuerung
- 67: weitere elektrische Verbraucher
- 68: elektrische Speichereinrichtung
- 69: Bordnetz
- 70: Stirnradstufe
- 71: Zahnradkette
- 72: Festrad der Vorgelegewelle 31
- 73: Festrad der Getriebeeingangswelle
- 74: Sonnenrad des Planetenradsatzes PEM4
- 75: Hohlrad des Planetenradsatzes PEM4
- 76: Planetenträger des Planetenradsatzes PEM4
- 77: Planetenräder des Planetenradsatzes PEM4
- 78: Schaltelementhälfte des Schaltelementes K4
- B: Schaltelement
- EM1, EM2: elektrische Maschine
- EM3: elektrische Maschine
- EM4: weitere elektrische Maschine
- HM1, HM2: hydraulische Maschine
- HR: Hohlrad
- HR1, HR2: Hohlrad
- HRE1, HRE2: Hohlrad
- K0: weiteres Schaltelement
- K1 bis K4: Schaltelemente
- K23: weiteres Schaltelement
- KV, KR: Fahrtrichtungskupplung
- P1: erster Planetenradsatz
- P2: zweiter Planetenradsatz
- PE1, PE2: einfaches Planetengetriebe des ersten Planetenradsatzes
- PEM1, PEM2, PEM4: Planetenradsatz
- PR: Planetenrad
- PR1: kleinerer Durchmesserbereich des Planetenrads
- PR2: größerer Durchmesserbereich des Planetenrads
- PR11, PR21: Planetenrad
- PRE1, PRE2: Planetenrad
- PT: Planetenträger
- PTE1, PTE2: Planetenträger
- SR, SR1, SR2: Sonnenrad
- SRE1, SRE2: Sonnenrad
- W11 bis W14: Welle des ersten Planetenradsatzes
- W21 bis W23: Welle des zweiten Planetenradsatzes
- W24: Planetenräder des zweiten Planetenradsatzes

## Patentansprüche

1. Stufenloses Leistungsverzweigungsgetriebe (3) mit wenigstens vier Fahrbereichen, innerhalb welchen die Übersetzung im Bereich eines Variators (5) stufenlos variierbar ist, wobei ein mehrere Wellen (W11 bis W14) umfassender erster Planetenradsatz (P1) über mehrere Schaltelemente (K1 bis K4) mit einem mehrere Wellen (W21 bis W23) aufweisenden zweiten Planetenradsatz (P2) in Wirkverbindung bringbar ist, der mit einer Getriebeausgangswelle (6) in Wirkverbindung steht oder in Wirkverbindung bringbar ist, wobei der erste Planetenradsatz (P1) vier Wellen (W11 bis W14) umfasst und über eine erste Welle (W11) mit einer Getriebeeingangswelle (7) und einer ersten Welle (8) des Variators (5) in Wirkverbindung steht oder in Wirkverbindung bringbar ist und über eine zweite Welle (W12) mit einer zweiten Welle (9) des Variators (5) in Wirkverbindung steht, während der erste Planetenradsatz (P1) über eine dritte Welle (W13) mit Schaltelementhälften (10, 11) von zwei Schaltelementen (K1, K3) und über eine vierte Welle (W14) mit einer Schaltelementhälfte (12) eines weiteren Schaltelementes (K2) gekoppelt ist, **dadurch gekennzeichnet, dass** zwei in den Kraftfluss zu- und aus dem Kraftfluss abschaltbare Fahrtrichtungskupplungen (KV, KR) und diesen zugeordnete Zahnradpaarungen (15 und 16 bzw. 18, 19, und 33) vorgesehen sind, wobei eine Drehrichtung der Getriebeausgangswelle (6) bei zugeschalteter erster Fahrtrichtungskupplung (KV oder KR) der Drehrichtung der Getriebeeingangswelle (7) entspricht und bei zugeschalteter zweiter Fahrtrichtungskupplung (KR oder KV) hiervon abweicht, und wobei die Getriebeausgangswelle (6) über die Fahrtrichtungskupplungen (KV, KR) mit dem zweiten Planetenradsatz (P2) in Wirkverbindung bringbar ist.

2. Stufenloses Leistungsverzweigungsgetriebe nach Anspruch 1, **dadurch gekennzeichnet, dass** die dritte Welle (W13) des ersten Planetenradsatzes (P1) über das Schaltelement (K1), mit dessen Schaltelementhälfte (10) die dritte Welle (W13) gekoppelt ist, mit einer ersten Welle (W21) des zweiten Planetenradsatzes (P2) und über das zweite Schaltelement (K3), mit dessen Schaltelementhälfte (11) die dritte Welle (W13) des ersten Planetenradsatzes (P1) ebenfalls gekoppelt ist, mit einer zweiten Welle (W22) des zweiten Planetenradsatzes (P2) in Wirkverbindung bringbar ist.

3. Stufenloses Leistungsverzweigungsgetriebe nach Anspruch 1 oder 2, **dadurch gekennzeichnet, dass** die vierte Welle (W14) des ersten Planetenradsatzes (P1) über das weitere Schaltelement (K2) mit der ersten Welle (W21) des zweiten Planetenradsatzes (P2) und einer Schaltelementhälfte (13) eines zusätzlichen Schaltelementes (K4) koppelbar ist, wobei die vierte Welle (W14) des ersten Planetenradsatzes (P1) über das zusätzliche Schaltelement (K4) mit der zweiten Welle (W22) oder mit der dritten Welle (W23) des zweiten Planetenradsatzes (P2) in Wirkverbindung bringbar ist.

4. Stufenloses Leistungsverzweigungsgetriebe nach Anspruch 1 oder 2, **dadurch gekennzeichnet, dass** die vierte Welle (W14) des ersten Planetenradsatzes (P1) über das weitere Schaltelement (K2) mit der ersten Welle (W21) des zweiten Planetenradsatzes (P2) koppelbar ist, während die zweite Welle (W22) des zweiten Planetenradsatzes (P2) über ein zusätzliches Schaltelement (K4) mit der dritten Welle (W23) des zweiten Planetenradsatzes (P2) in Wirkverbindung bringbar ist.

5. Stufenloses Leistungsverzweigungsgetriebe nach einem der Ansprüche 1 bis 4, **dadurch gekennzeichnet, dass** die zweite Welle (W22) des zweiten Planetenradsatzes (P2) über ein Schaltelement (B) drehfest mit einem gehäusefesten Bauteil verbindbar ist.

6. Stufenloses Leistungsverzweigungsgetriebe nach einem der Ansprüche 1 bis 5, **dadurch gekennzeichnet, dass** im Bereich der Getriebeeingangswelle (7) ein Schaltelement (K0) vorgesehen ist, über das eine mit der Getriebeeingangswelle (7) koppelbare Antriebsmaschine (2) eines mit dem Leistungsverzweigungsgetriebe (3) ausgeführten Fahrzeugantriebsstranges (1) mit der ersten Welle (W11) des ersten Planetenradsatzes (P1) in Wirkverbindung bringbar oder von dieser entkoppelbar ist.

7. Stufenloses Leistungsverzweigungsgetriebe nach einem der Ansprüche 1 bis 6, **dadurch gekennzeichnet, dass** die Getriebeeingangswelle (7) mit einer elektrischen Maschine (EM4) wirkverbunden ist.

8. Stufenloses Leistungsverzweigungsgetriebe nach Anspruch 7, **dadurch gekennzeichnet, dass** die Fahrtrichtungskupplungen (KV, KR) im Bereich der Wirkverbindung zwischen dem zweiten Planetenradsatz (P2) und der Getriebeausgangswelle (6) angeordnet sind.

9. Stufenloses Leistungsverzweigungsgetriebe nach einem der Ansprüche 1 bis 8, **dadurch gekennzeichnet, dass** der Variator (5) als hydraulischer Variator mit zwei hydraulischen Maschinen (HM1, HM2) ausgebildet ist, wobei das Schluckvolumen wenigstens einer der hydraulischen Maschinen (HM2) variierbar ist.

10. Stufenloses Leistungsverzweigungsgetriebe nach einem der Ansprüche 1 bis 8, **dadurch gekennzeichnet, dass** der Variator (5) als elektrischer Variator mit zwei elektrischen Maschinen (EM1, EM2) ausgeführt ist.

11. Stufenloses Leistungsverzweigungsgetriebe nach einem der Ansprüche 1 bis 10, **dadurch gekennzeichnet, dass** der Variator (5) mit seiner ersten Welle (8) direkt, über Stirnräder (24, 25, 26) und/oder über einen Planetenradsatz (PEM1) mit der ersten Welle (W11) des ersten Planetenradsatzes (P1) in Wirkverbindung steht und mit seiner zweiten Welle (9) direkt, über Stirnräder (29, 30) und/oder über einen Planetenradsatz (PEM2) mit der zweiten Welle (W12) des ersten Planetenradsatzes (P1) wirkverbunden ist.

12. Stufenloses Leistungsverzweigungsgetriebe nach einem der Ansprüche 1 bis 11, **dadurch gekennzeichnet, dass** der erste Planetenradsatz (P1), der zweite Planetenradsatz (P2), die Fahrtrichtungskupplungen (KV, KR), die Schaltelemente (K1 bis K4, B) und/oder der Variator (5) koaxial zueinander angeordnet sind.

13. Stufenloses Leistungsverzweigungsgetriebe nach einem der Ansprüche 1 bis 12, **dadurch gekennzeichnet, dass** der erste Planetenradsatz (P1), der zweite Planetenradsatz (P2), die Fahrtrichtungskupplungen (KV, KR), die Schaltelemente (K1 bis K4, B) und/oder der Variator (5) versetzt zueinander und auf zueinander beabstandeten Vorgelegewellen (31; 63) angeordnet sind.

14. Stufenloses Leistungsverzweigungsgetriebe nach einem der Ansprüche 1 bis 13, **dadurch gekennzeichnet, dass** der Variator (5) in axialer Richtung zwischen dem Getriebeeingang (27) und dem ersten Planetenradsatz (P1) koaxial zum ersten Planetenradsatz (P1) oder in radialer Richtung versetzt zum ersten Planetenradsatz (P1) angeordnet ist.

15. Stufenloses Leistungsverzweigungsgetriebe nach einem der Ansprüche 1 bis 14, **dadurch gekennzeichnet, dass** die zweite Welle (W12) des ersten Planetenradsatzes (P1) in axialer Richtung zwischen dem Getriebeeingang (27) und dem ersten Planetenradsatz (P1) mit der zweiten Welle (9) des Variators (5) verbunden ist, während die erste Welle (8) des Variators (5) mit der ersten Welle (W11) des ersten Planetenradsatzes (P1) in axialer Richtung zwischen dem zweiten Planetenradsatz (P2) und dem Getriebeausgang (28) in Wirkverbindung steht.

16. Stufenloses Leistungsverzweigungsgetriebe nach einem der Ansprüche 8 bis 15, **dadurch gekennzeichnet, dass** die Fahrtrichtungskupplungen (KV, KR) radial zueinander versetzt und in axialer Richtung vorzugsweise in einer gemeinsamen Ebene angeordnet sind.

17. Stufenloses Leistungsverzweigungsgetriebe nach Anspruch 15 oder 16, **dadurch gekennzeichnet, dass** der Getriebeeingang (27) und der Getriebeausgang (28) auf der gleichen Seite oder in axialer Richtung auf verschiedenen Seiten angeordnet sind.

18. Stufenloses Leistungsverzweigungsgetriebe nach einem der Ansprüche 1 bis 17, **dadurch gekennzeichnet, dass** der erste Planetenradsatz (P1) einen Stufenplanetenradsatz umfasst und die erste Welle (W11) des ersten Planetenradsatzes (P1) mit einem Sonnenrad (SR1) des Stufenplanetenradsatzes, die zweite Welle (W12) des ersten Planetenradsatzes (P1) mit einem Hohlrad (HR) des Stufenplanetenradsatzes, die dritte Welle (W13) des ersten Planetenradsatzes (P1) mit einem Planetenträger (PT) des Stufenplanetenradsatzes und die vierte Welle (W14) des ersten Planetenradsatzes (P1) mit einem weiteren Sonnenrad (SR2) des Stufenplanetenradsatzes verbunden ist, wobei auf dem Planetenträger (PT) drehbar gelagerte Stufenplanetenräder (PR) mit einem größeren Durchmesserbereich (PR2) mit dem Hohlrad (HR) und dem weiteren Sonnenrad (SR2) kämmen, dessen Durchmesser kleiner als der Durchmesser des Sonnenrades (SR1) ist, und wobei die Planetenräder (PR) mit einem kleineren Durchmesserbereich (PR1) mit dem Sonnenrad (SR1) in Eingriff stehen.

19. Stufenloses Leistungsverzweigungsgetriebe nach einem der Ansprüche 1 bis 17, **dadurch gekennzeichnet, dass** der erste Planetenradsatz (P1) zwei Hohlräder (HR1, HR2), ein Sonnenrad (SR) und einen Planetenträger (PT) aufweist, wobei auf dem Planetenträger (PT) Planetenräder (PR11, PR21) drehbar gelagert sind, wobei zumindest ein erstes Planetenrad (PR11) mit dem einen Hohlrad (HR1) und mit wenigstens einem zweiten Planetenrad (PR21) kämmt, während das wenigstens zweite Planetenrad (PR21) mit dem anderen Hohlrad (HR2) und dem Sonnenrad (SR) in Eingriff steht, und wobei die erste Welle (W11) des ersten Planetenradsatzes (P1) mit dem einen Hohlrad (HR1), die zweite Welle (W12) des ersten Planetenradsatzes (P1) mit dem anderen Hohlrad (HR2), die dritte Welle (W13) des ersten Planetenradsatzes (P1) mit dem Planetenträger (PT) und die vierte Welle (W14) des ersten Planetenradsatzes (P1) mit dem Sonnenrad (SR) verbunden ist.

20. Stufenloses Leistungsverzweigungsgetriebe nach Anspruch 19, **dadurch gekennzeichnet, dass** das erste Planetenrad (PR11) und das zweite Planetenrad (PR21) in axialer Richtung versetzt zueinander und vorzugsweise auf dem gleichen Durchmesser drehbar auf dem Planetenträger (PT) angeordnet sind und wie die Hohlräder (HR1, HR2) vorzugsweise die gleiche Zähnezahl aufweisen.

21. Stufenloses Leistungsverzweigungsgetriebe nach einem der Ansprüche 1 bis 17, **dadurch gekennzeichnet, dass** der erste Planetenradsatz (P1) zwei einfache Planetengetriebe (PE1, PE2) mit jeweils einem Hohlrad (HRE1, HRE2), mit einem Planetenträger (PTE1, PTE2) und darauf drehbar gelagerte Planetenräder (PRE1, PRE2) und mit einem Sonnenrad (SRE1, SRE2) umfasst, wobei die erste Welle (W11) des ersten Planetenradsatzes (P1) mit dem Planetenträger (PTE1) des ersten einfachen Planetengetriebes (PE1), die zweite Welle (W12) des ersten Planetenradsatzes (P1) mit dem Sonnenrad (SRE1) des ersten einfachen Planetengetriebes (PE1) und mit dem Hohlrad (HRE2) des zweiten einfachen Planetengetriebes (PE2), die dritte Welle (W3) des ersten Planetenradsatzes (P1) mit dem Planetenträger (PTE2) des zweiten einfachen Planetengetriebes (PE2) und die vierte Welle (W14) des ersten Planetenradsatzes (P1) mit dem Sonnenrad (SRE2) des zweiten einfachen Planetengetriebes (PE2) und mit dem Hohlrad (HRE1) des ersten einfachen Planetengetriebes (PE1) verbunden ist.

22. Stufenloses Leistungsverzweigungsgetriebe nach Anspruch 21, **dadurch gekennzeichnet, dass** das erste einfache Planetengetriebe (PE1) radial innerhalb des zweiten einfachen Planetengetriebes (PE2) angeordnet ist.

23. Stufenloses Leistungsverzweigungsgetriebe nach einem der Ansprüche 1 bis 17, **dadurch gekennzeichnet, dass** der erste Planetenradsatz (P1) zwei einfache Planetengetriebe (PE1, PE2) mit jeweils einem Hohlrad (HRE1, HRE2), mit einem Planetenträger (PTE1, PTE2) und darauf drehbar gelagerten Planetenrädern (PRE1, PRE2) und mit einem Sonnenrad (SRE1, SRE2) umfasst, wobei die erste Welle (W11) des ersten Planetenradsatzes (P1) mit dem Planetenträger (PTE1) des ersten einfachen Planetengetriebes (PE1), die zweite Welle (W12) des ersten Planetenradsatzes (P1) mit dem Hohlrad (HRE2) des zweiten einfachen Planetengetriebes (PE2), die dritte Welle (W13) des ersten Planetenradsatzes (P1) mit dem Planetenträger (PTE2) des zweiten einfachen Planetengetriebes (PE2) und mit dem Hohlrad (HRE1) des ersten einfachen Planetengetriebes (PE1) und die vierte Welle (W14) des ersten Planetenradsatzes (P1) mit dem Sonnenrad (SRE2) des zweiten einfachen Planetengetriebes (PE2) und mit dem Sonnenrad (SRE1) des ersten einfachen Planetengetriebes (PE1) verbunden ist.

24. Stufenloses Leistungsverzweigungsgetriebe nach einem der Ansprüche 1 bis 17, **dadurch gekennzeichnet, dass** der erste Planetenradsatz (P1) einen Ravigneaux-Radsatz umfasst, wobei die erste Welle (W11) des ersten Planetenradsatzes (P1) mit einem Planetenträger (PT) des Ravigneaux-Radsatzes, die zweite Welle (W12) des ersten Planetenradsatzes (P1) mit einem Sonnenrad (SR1) des Ravigneaux-Radsatzes, die dritte Welle (W13) des ersten Planetenradsatzes (P1) mit einem Hohlrad (HR) des Ravigneaux-Radsatzes und die vierte Welle (W14) des ersten Planetenradsatzes (P1) mit einem weiteren Sonnenrad (SR2) des Ravigneaux-Radsatzes wirkverbunden ist, und wobei das Sonnenrad (SR1) mit einem kleineren Durchmesser ausgeführt ist als das weitere Sonnenrad (SR2).

25. Stufenloses Leistungsverzweigungsgetriebe nach einem der Ansprüche 1 bis 17, **dadurch gekennzeichnet, dass** der erste Planetenradsatz (P1) des Leistungsverzweigungsgetriebes (3) einen Planetenradsatz mit zwei Hohlrädern (HR1, HR2), mit einem Planetenträger (PT) und mit einem Sonnenrad (SR) aufweist, wobei auf dem Planetenträger (PT) mehrere Planetenräder (PR11, PR21) drehbar angeordnet sind und ein Teil der Planetenräder (PR11) mit einer größeren axialen Länge als ein weiterer Teil der Planetenräder (PR21) ausgeführt ist, wobei die längeren Planetenräder (PR11) mit dem einen Hohlrad (HR2), dem Sonnenrad (SR) und den kürzeren Planetenrädern (PR21) kämmen, während die kürzeren Planetenräder (PR21) mit dem weiteren Hohlrad (HR1) und den längeren Planetenrädern (PR11) in Eingriff stehen und das eine Hohlrad (HR2) mit einem kleinerem Durchmesser als das andere Hohlrad (HR1) ausgeführt und radial vom größeren Hohlrad (HR1) übergriffen ist.

26. Stufenloses Leistungsverzweigungsgetriebe nach Anspruch 25, **dadurch gekennzeichnet, dass** die erste Welle (W11) des ersten Planetenradsatzes (P1) mit dem Planetenträger (PT), die zweite Welle (W12) des ersten Planetenradsatzes (P1) mit den Sonnenrad (SR), die dritte Welle (W13) des ersten Planetenradsatzes (P1) mit dem größeren Hohlrad (HR1) und die vierte Welle (W14) des ersten Planetenradsatzes (P1) mit dem kleineren Hohlrad (HR2) gekoppelt ist.

27. Stufenloses Leistungsverzweigungsgetriebe nach einem der Ansprüche 1 bis 26, **dadurch gekennzeichnet, dass** der zweite Planetenradsatz (P2) als ein einfacher Planetenradsatz ausgebildet ist, wobei die erste Welle (W21) des zweiten Planetenradsatzes (P2) als Sonnenrad, die zweite Welle (W22) des zweiten Planetenradsatzes (P2) als Hohlrad und die dritte Welle (W23) des zweiten Planetenradsatzes (P2) als Planetenträger ausgeführt ist, wobei auf dem Planetenträger (W23) Planetenräder (W24) drehbar gelagert sind.

## Claims

1. Power split continuously variable transmission (3) having at least four travel ranges within which the transmission ratio is continuously variable in the region of a variator (5), wherein a first planetary gear set (P1) which comprises multiple shafts (W11 to W14) can be operatively connected to a second planetary gear set (P2) which has multiple shafts (W21 to W23) via multiple shift elements (K1 to K4), said second planetary gear set being operatively connected or being able to be operatively connected to a transmission output shaft (6), wherein the first planetary gear set (P1) comprises four shafts (W11 to W14) and is operatively connected or can be operatively connected to a transmission input shaft (7) and a first shaft (8) of the variator (5) via a first shaft (W11) and is operatively connected to a second shaft (9) of the variator (5) via a second shaft (W12) while the first planetary gear set (P1) is coupled to shift element halves (10, 11) of two shift elements (K1, K3) via a third shaft (W13) and to a shift element half (12) of a further shift element (K2) via a fourth shaft (W14), **characterized in that** two driving direction clutches (KV, KR) which can be engaged into the power flow and can be disengaged from the power flow and gear wheel pairs (15 and 16 or 18, 19, and 33) which are associated with said driving direction clutches are provided, wherein a rotation direction of the transmission output shaft (6) corresponds to the rotation direction of the transmission input shaft (7) when the first driving direction clutch (KV or KR) is engaged and differs from said rotation direction when the second driving direction clutch (KR or KV) is engaged, and wherein
the transmission output shaft (6) can be operatively connected to the second planetary gear set (P2) via the driving direction clutches (KV, KR).

2. Power split continuously variable transmission according to Claim 1, **characterized in that** the third shaft (W13) of the first planetary gear set (P1) can be operatively connected to a first shaft (W21) of the second planetary gear set (P2) via the shift element (K1), the third shaft (W13) being coupled to the shift element half (10) of said shift element, and can be operatively connected to a second shaft (W22) of the second planetary gear set (P2) via the second shift element (K3), the third shaft (W13) of the first planetary gear set (P1) likewise being coupled to the shift element half (11) of said second shift element.

3. Power split continuously variable transmission according to Claim 1 or 2, **characterized in that** the fourth shaft (W14) of the first planetary gear set (P1) can be coupled to the first shaft (W21) of the second planetary gear set (P2) and a shift element half (13) of an additional shift element (K4) via the further shift element (K2), wherein the fourth shaft (W14) of the first planetary gear set (P1) can be operatively connected to the second shaft (W22) or to the third shaft (W23) of the second planetary gear set (P2) via the additional shift element (K4).

4. Power split continuously variable transmission according to Claim 1 or 2, **characterized in that** the fourth shaft (W14) of the first planetary gear set (P1) can be coupled to the first shaft (W21) of the second planetary gear set (P2) via the further shift element (K2), while the second shaft (W22) of the second planetary gear set (P2) can be operatively connected to the third shaft (W23) of the second planetary gear set (P2) via an additional shift element (K4).

5. Power split continuously variable transmission according to one of Claims 1 to 4, **characterized in that** the second shaft (W22) of the second planetary gear set (P2) can be connected in a rotationally fixed manner via a shift element (B) to a component which is fixed to the housing.

6. Power split continuously variable transmission according to one of Claims 1 to 5, **characterized in that** a shift element (K0) is provided in the region of the transmission input shaft (7), a drive machine (2), which can be coupled to the transmission input shaft (7), of a vehicle drive train (1) which is embodied with the power split transmission (3) being able to be operatively connected to the first shaft (W11) of the first planetary gear set (P1) or being able to be uncoupled therefrom via said shift element.

7. Power split continuously variable transmission according to one of Claims 1 to 6, **characterized in that** the transmission input shaft (7) is operatively connected to an electric machine (EM4).

8. Power split continuously variable transmission according to Claim 7, **characterized in that** the driving direction clutches (KV, KR) are arranged in the region of the operative connection between the second planetary gear set (P2) and the transmission output shaft (6).

9. Power split continuously variable transmission according to one of Claims 1 to 8, **characterized in that** the variator (5) is in the form of a hydraulic variator with two hydraulic machines (HM1, HM2), wherein the intake volume of at least one of the hydraulic machines (HM2) can be varied.

10. Power split continuously variable transmission according to one of Claims 1 to 8, **characterized in that** the variator (5) is embodied as an electrical variator with two electric machines (EM1, EM2).

11. Power split continuously variable transmission according to one of Claims 1 to 10, **characterized in that** the variator (5), by way of its first shaft (8), is operatively connected to the first shaft (W11) of the first planetary gear set (P1) directly, via spur gears (24, 25, 26) and/or via a planetary gear set (PEM1), and, by way of its second shaft (9), is operatively connected to the second shaft (W12) of the first planetary gear set (P1) directly, via spur gears (29, 30) and/or via a planetary gear set (PEM2).

12. Power split continuously variable transmission according to one of Claims 1 to 11, **characterized in that** the first planetary gear set (P1), the second planetary gear set (P2), the driving direction clutches (KV, KR), the shift elements (K1 to K4, B) and/or the variator (5) are arranged coaxially with respect to one another.

13. Power split continuously variable transmission according to one of Claims 1 to 12, **characterized in that** the first planetary gear set (P1), the second planetary gear set (P2), the driving direction clutches (KV, KR), the shift elements (K1 to K4, B) and/or the variator (5) are arranged offset with respect to one another and on countershafts (31; 63) which are spaced apart with respect to one another.

14. Power split continuously variable transmission according to one of Claims 1 to 13, **characterized in that** the variator (5) is arranged between the transmission input (27) and the first planetary gear set (P1) coaxially with respect to the first planetary gear set (P1) in the axial direction or offset with respect to the first planetary gear set (P1) in the radial direction.

15. Power split continuously variable transmission according to one of Claims 1 to 14, **characterized in that** the second shaft (W12) of the first planetary gear set (P1) is connected to the second shaft (9) of the variator (5) between the transmission input (27) and the first planetary gear set (P1) in the axial direction, while the first shaft (8) of the variator (5) is operatively connected to the first shaft (W11) of the first planetary gear set (P1) between the second planetary gear set (P2) and the transmission output (28) in the axial direction.

16. Power split continuously variable transmission according to one of Claims 8 to 15, **characterized in that** the driving direction clutches (KV, KR) are arranged in a manner radially offset with respect to one another and preferably in a common plane in the axial direction.

17. Power split continuously variable transmission according to Claim 15 or 16, **characterized in that** the transmission input (27) and the transmission output (28) are arranged on the same side or on different sides in the axial direction.

18. Power split continuously variable transmission according to one of Claims 1 to 17, **characterized in that** the first planetary gear set (P1) comprises a stepped planetary gear set and the first shaft (W11) of the first planetary gear set (P1) is connected to a sun gear (SR1) of the stepped planetary gear set, the second shaft (W12) of the first planetary gear set (P1) is connected to a ring gear (HR) of the stepped planetary gear set, the third shaft (W13) of the first planetary gear set (P1) is connected to a planet carrier (PT) of the stepped planetary gear set, and the fourth shaft (W14) of the first planetary gear set (P1) is connected to a further sun gear (SR2) of the stepped planetary gear set, wherein stepped planetary gears (PR) which are rotatably mounted on the planet carrier (PT) and have a relatively large diameter range (PR2) mesh with the ring gear (HR) and the further sun gear (SR2), the diameter of said further sun gear being smaller than the diameter of the sun gear (SR1), and wherein the planetary gears (PR) having a relatively small diameter range (PR1) are in engagement with the sun gear (SR1).

19. Power split continuously variable transmission according to one of Claims 1 to 17, **characterized in that** the first planetary gear set (P1) has two ring gears (HR1, HR2), a sun gear (SR) and a planet carrier (PT), wherein planetary gears (PR11, PR21) are rotatably mounted on the planet carrier (PT), wherein at least one first planetary gear (PR11) meshes with one ring gear (HR1) and with at least one second planetary gear (PR21), while the at least second planetary gear (PR21) is in engagement with the other ring gear (HR2) and the sun gear (SR), and wherein the first shaft (W11) of the first planetary gear set (P1) is connected to one ring gear (HR1), the second shaft (W12) of the first planetary gear set (P1) is connected to the other ring gear (HR2), the third shaft (W13) of the first planetary gear set (P1) is connected to the planet carrier (PT), and the fourth shaft (W14) of the first planetary gear set (P1) is connected to the sun gear (SR).

20. Power split continuously variable transmission according to Claim 19, **characterized in that** the first planetary gear (PR11) and the second planetary gear (PR21) are arranged in a manner offset with respect to one another in the axial direction and preferably rotatably on the planet carrier (PT) on the same diameter and, like the ring gears (HR1, HR2), preferably have the same number of teeth.

21. Power split continuously variable transmission according to one of Claims 1 to 17, **characterized in that** the first planetary gear set (P1) has two simple planetary transmissions (PE1, PE2) each having a ring gear (HRE1, HRE2), having a planet carrier (PTE1, PTE2) and planetary gears (PRE1, PRE2) rotatably mounted thereon and having a sun gear (SRE1, SRE2), wherein the first shaft (W11) of the first planetary gear set (P1) is connected to the planet carrier (PTE1) of the first simple planetary transmission (PE1), the second shaft (W12) of the first planetary gear set (P1) is connected to the sun gear (SRE1) of the first simple planetary transmission (PE1) and to the ring gear (HRE2) of the second simple planetary transmission (PE2), the third shaft (W13) of the first planetary gear set (P1) is connected to the planet carrier (PTE2) of the second simple planetary transmission (PE2), and the fourth shaft (W14) of the first planetary gear set (P1) is connected to the sun gear (SRE2) of the second simple planetary transmission (PE2) and to the ring gear (HRE1) of the first simple planetary transmission (PE1).

22. Power split continuously variable transmission according to Claim 21, **characterized in that** the first simple planetary transmission (PE1) is arranged radially inside the second simple planetary transmission (PE2).

23. Power split continuously variable transmission according to one of Claims 1 to 17, **characterized in that** the first planetary gear set (P1) comprises two simple planetary transmissions (PE1, PE2) each having a ring gear (HRE1, HRE2), having a planet carrier (PTE1, PTE2) and planetary gears (PRE1, PRE2) rotatably mounted thereon and having a sun gear (SRE1, SRE2), wherein the first shaft (W11) of the first planetary gear set (P1) is connected to the planet carrier (PTE1) of the first simple planetary transmission (PE1), the second shaft (W12) of the first planetary gear set (P1) is connected to the ring gear (HRE2) of the second simple planetary transmission (PE2), the third shaft (W13) of the first planetary gear set (P1) is connected to the planet carrier (PTE2) of the second simple planetary transmission (PE2) and to the ring gear (HRE1) of the first simple planetary transmission (PE1), and the fourth shaft (W14) of the first planetary gear set (P1) is connected to the sun gear (SRE2) of the second simple planetary transmission (PE2) and to the sun gear (SRE1) of the first simple planetary transmission (PE1).

24. Power split continuously variable transmission according to one of Claims 1 to 17, **characterized in that** the first planetary gear set (P1) comprises a Ravigneaux gear set, wherein the first shaft (W11) of the first planetary gear set (P1) is operatively connected to a planet carrier (PT) of the Ravigneaux gear set, the second shaft (W12) of the first planetary gear set (P1) is operatively connected to the sun gear (SR1) of the Ravigneaux gear set, the third shaft (W13) of the first planetary gear set (P1) is operatively connected to a ring gear (HR) of the Ravigneaux gear set, and the fourth shaft (W14) of the first planetary gear set (P1) is operatively connected to a further sun gear (SR2) of the Ravigneaux gear set, and wherein the sun gear (SR1) having a relatively small diameter is embodied as the further sun gear (SR2).

25. Power split continuously variable transmission according to one of Claims 1 to 17, **characterized in that** the first planetary gear set (P1) of the power split transmission (3) has a planetary gear set with two ring gears (HR1, HR2), with a planet carrier (PT) and with a sun gear (SR), wherein a plurality of planetary gears (PR11, PR21) are rotatably arranged on the planet carrier (PT) and a portion of the planetary gears (PR11) having a relatively large axial length are embodied as a further portion of the planetary gears (PR21), wherein the relatively long planetary gears (PR11) mesh with one ring gear (HR2), the sun gear (SR) and the relatively short planetary gears (PR21), while the relatively short planetary gears (PR21) are in engagement with the further ring gear (HR1) and the relatively long planetary gears (PR11), and the ring gear (HR2) having a relatively small diameter is embodied as the other ring gear (HR1) and is radially overlapped by the relatively large ring gear (HR1).

26. Power split continuously variable transmission according to Claim 25, **characterized in that** the first shaft (W11) of the first planetary gear set (P1) is coupled to the planet carrier (PT), the second shaft (W12) of the first planetary gear set (P1) is coupled to the sun gear (SR), the third shaft (W13) of the first planetary gear set (P1) is coupled to the relatively large ring gear (HR1), and the fourth shaft (W14) of the first planetary gear set (P1) is coupled to the relatively small ring gear (HR2).

27. Power split continuously variable transmission according to one of Claims 1 to 26, **characterized in that** the second planetary gear set (P2) is in the form of a simple planetary gear set, wherein the first shaft (W21) of the second planetary gear set (P2) is embodied as a sun gear, the second shaft (W22) of the second planetary gear set (P2) is embodied as a ring gear, and the third shaft (W23) of the second planetary gear set (P2) is embodied as a planet carrier, wherein planetary gears (W24) are rotatably mounted on the planet carrier (W23).

## Revendications

1. Transmission à variation continue à dérivation de puissance (3) présentant au moins quatre plages de marche, à l'intérieur desquelles le rapport de démultiplication peut varier en continu dans la région d'un variateur (5), un premier train planétaire (P1) comprenant plusieurs arbres (W11 à W14) pouvant être amené en liaison fonctionnelle avec un deuxième train planétaire (P2) présentant plusieurs arbres (W21 à W23) par le biais de plusieurs éléments de changement de vitesse (K1 à K4), lequel deuxième train planétaire est en liaison fonctionnelle ou peut être amené en liaison fonctionnelle avec un arbre de sortie de transmission (6), le premier train planétaire (P1) comprenant quatre arbres (W11 à W14) et étant en liaison fonctionnelle ou pouvant être amené en liaison fonctionnelle, par le biais d'un premier arbre (W11), avec un arbre d'entrée de transmission (7) et un premier arbre (8) du variateur (5) et étant en liaison fonctionnelle, par le biais d'un deuxième arbre (W12), avec un deuxième arbre (9) du variateur (5), tandis que le premier train planétaire (P1) est accouplé, par le biais d'un troisième arbre (W13), avec des moitiés (10, 11) de deux éléments de changement de vitesse (K1, K3) et, par le biais d'un quatrième arbre (W14), à une moitié (12) d'un autre élément de changement de vitesse (K2), **caractérisée en ce que** deux embrayages de direction de marche (KV, KR) pouvant être connectés dans le flux de force et pouvant être déconnectés du flux de force et des paires de roues dentées (15 et 16 ou 18, 19, et 33) associées à ceux-ci sont prévus, un sens de rotation de l'arbre de sortie de transmission (6) lorsque le premier embrayage de direction de marche (KV ou KR) est connecté correspondant au sens de rotation de l'arbre d'entrée de transmission (7) et différant de celui-ci lorsque le deuxième embrayage de direction de marche (KR ou KV) est connecté, et l'arbre de sortie de transmission (6) pouvant être amené en liaison fonctionnelle avec le deuxième train planétaire (P2) par le biais des embrayages de direction de marche (KV, KR).

2. Transmission à variation continue à dérivation de puissance selon la revendication 1, **caractérisée en ce que** le troisième arbre (W13) du premier train planétaire (P1), par le biais de l'élément de changement de vitesse (K1) aux moitiés d'éléments de changement de vitesse (10) duquel le troisième arbre (W13) est accouplé, peut être amené en liaison fonctionnelle avec un premier arbre (W21) du deuxième train planétaire (P2) et, par le biais du deuxième élément de changement de vitesse (K3) aux moitiés d'éléments de changement de vitesse (11) duquel le troisième arbre (W13) du premier train planétaire (P1) est également accouplé, peut être amené en liaison fonctionnelle avec un deuxième arbre (W22) du deuxième train planétaire (P2).

3. Transmission à variation continue à dérivation de puissance selon la revendication 1 ou 2, **caractérisée en ce que** le quatrième arbre (W14) du premier train planétaire (P1) peut être accouplé, par le biais de l'autre élément de changement de vitesse (K2), au premier arbre (W21) du deuxième train planétaire (P2) et à une moitié (13) d'un élément de changement de vitesse (K4) supplémentaire, le quatrième arbre (W14) du premier train planétaire (P1) pouvant être amené en liaison fonctionnelle, par le biais de l'élément de changement de vitesse (K4) supplémentaire, avec le deuxième arbre (W22) ou avec le troisième arbre (W23) du deuxième train planétaire (P2).

4. Transmission à variation continue à dérivation de puissance selon la revendication 1 ou 2, **caractérisée en ce que** le quatrième arbre (W14) du premier train planétaire (P1) peut être accouplé, par le biais de l'autre élément de changement de vitesse (K2), au premier arbre (W21) du deuxième train planétaire (P2), tandis que le deuxième arbre (W22) du deuxième train planétaire (P2) peut être amené en liaison fonctionnelle, par le biais d'un élément de changement de vitesse (K4) supplémentaire, avec le troisième arbre (W23) du deuxième train planétaire (P2).

5. Transmission à variation continue à dérivation de puissance selon l'une des revendications 1 à 4, **caractérisée en ce que** le deuxième arbre (W22) du deuxième train planétaire (P2) peut être relié, par le biais d'un élément de changement de vitesse (B), de manière solidaire en rotation à un composant solidaire du carter.

6. Transmission à variation continue à dérivation de puissance selon l'une des revendications 1 à 5, **caractérisée en ce que**, dans la région de l'arbre d'entrée de transmission (7), un élément de changement de vitesse (K0) est prévu, par le biais duquel une machine d'entraînement (2), pouvant être accouplée à l'arbre d'entrée de transmission (7), d'une chaîne cinématique de véhicule (1) réalisée avec la transmission à dérivation de puissance (3) peut être amenée en liaison fonctionnelle avec le premier arbre (W11) du premier train planétaire (P1) ou peut être désaccouplée de ce premier arbre.

7. Transmission à variation continue à dérivation de puissance selon l'une des revendications 1 à 6, **caractérisée en ce que** l'arbre d'entrée de transmission (7) est relié fonctionnellement à une machine électrique (EM4).

8. Transmission à variation continue à dérivation de puissance selon la revendication 7, **caractérisée en ce que** les embrayages de direction de marche (KV, KR) sont disposés dans la région de la liaison fonctionnelle entre le deuxième train planétaire (P2) et l'arbre de sortie de transmission (6).

9. Transmission à variation continue à dérivation de puissance selon l'une des revendications 1 à 8, **caractérisée en ce que** le variateur (5) est réalisé sous forme de variateur hydraulique comprenant deux machines hydrauliques (HM1, HM2), le volume absorbé par tour d'au moins l'une des machines hydrauliques (HM2) étant variable.

10. Transmission à variation continue à dérivation de puissance selon l'une des revendications 1 à 8, **caractérisée en ce que** le variateur (5) est réalisé sous forme de variateur électrique comprenant deux machines électriques (EM1, EM2).

11. Transmission à variation continue à dérivation de puissance selon l'une des revendications 1 à 10, **caractérisée en ce que** le variateur (5) est en liaison fonctionnelle par son premier arbre (8) directement, par le biais de pignons droits (24, 25, 26) et/ou par le biais d'un train planétaire (PEM1) avec le premier arbre (W11) du premier train planétaire (P1) et est en liaison fonctionnelle par son deuxième arbre (9) directement, par le biais de pignons droits (29, 30) et/ou par le biais d'un train planétaire (PEM2) avec le deuxième arbre (W12) du premier train planétaire (P1).

12. Transmission à variation continue à dérivation de puissance selon l'une des revendications 1 à 11, **caractérisée en ce que** le premier train planétaire (P1), le deuxième train planétaire (P2), les embrayages direction de marche (KV, KR), les éléments de changement de vitesse (K1 à K4, B) et/ou le variateur (5) sont disposés coaxialement les uns par rapport aux autres.

13. Transmission à variation continue à dérivation de puissance selon l'une des revendications 1 à 12, **caractérisée en ce que** le premier train planétaire (P1), le deuxième train planétaire (P2), les embrayages de direction de marche (KV, KR), les éléments de changement de vitesse (K1 à K4, B) et/ou le variateur (5) sont disposés de manière décalée les uns par rapport aux autres et sur des arbres intermédiaires (31 ; 63) espacés l'un de l'autre.

14. Transmission à variation continue à dérivation de puissance selon l'une des revendications 1 à 13, **caractérisée en ce que** le variateur (5) est disposé, dans la direction axiale, entre l'entrée de transmission (27) et le premier train planétaire (P1) coaxialement au premier train planétaire (P1) ou, dans la direction radiale, de manière décalée par rapport au premier train planétaire (P1).

15. Transmission à variation continue à dérivation de puissance selon l'une des revendications 1 à 14, **caractérisée en ce que** le deuxième arbre (W12) du premier train planétaire (P1), dans la direction axiale, est relié au deuxième arbre (9) du variateur (5) entre l'entrée de transmission (27) et le premier train planétaire (P1), tandis que le premier arbre (8) du variateur (5), dans la direction axiale, est en liaison fonctionnelle avec le premier arbre (W11) du premier train planétaire (P1) entre le deuxième train planétaire (P2) et la sortie de transmission (28).

16. Transmission à variation continue à dérivation de puissance selon l'une des revendications 8 à 15, **caractérisée en ce que** les embrayages de direction de marche (KV, KR) sont disposés de manière décalée radialement l'un par rapport à l'autre et de préférence dans un plan commun dans la direction axiale.

17. Transmission à variation continue à dérivation de puissance selon la revendication 15 ou 16, **caractérisée en ce que** l'entrée de transmission (27) et la sortie de transmission (28) sont disposées sur le même côté ou sur des côtés différents dans la direction axiale.

18. Transmission à variation continue à dérivation de puissance selon l'une des revendications 1 à 17, **caractérisée en ce que** le premier train planétaire (P1) comprend un train planétaire étagé et le premier arbre (W11) du premier train planétaire (P1) est relié à une roue planétaire (SR1) du train planétaire étagé, le deuxième arbre (W12) du premier train planétaire (P1) est relié à une couronne (HR) du train planétaire étagé, le troisième arbre (W13) du premier train planétaire (P1) est relié à un porte-satellites (PT) du train planétaire étagé et le quatrième arbre (W14) du premier train planétaire (P1) est relié à une autre roue planétaire (SR2) du train planétaire étagé, des roues satellites étagées (PR) montées à rotation sur le porte-satellites (PT) s'engrenant, par une région de plus grand diamètre (PR2), avec la couronne (HR) et l'autre roue planétaire (SR2), dont le diamètre est inférieur au diamètre de la planétaire (SR1), et les roues satellites (PR) venant en prise, par une région de diamètre (PR1) plus petit, avec la roue planétaire (SR1).

19. Transmission à variation continue à dérivation de puissance selon l'une des revendications 1 à 17, **caractérisée en ce que** le premier train planétaire (P1) présente deux couronnes (HR1, HR2), une roue planétaire (SR) et un porte-satellites (PT), des roues satellites (PR11, PR21) étant montées à rotation sur le porte-satellites (PT), au moins une première roue satellite (PR11) s'engrenant avec l'une des couronnes (HR1) et avec au moins une deuxième roue satellite (PR21), tandis que l'au moins une deuxième roue satellite (PR21) est en prise avec l'autre couronne (HR2) et la roue planétaire (SR), et le premier arbre (W11) du premier train planétaire (P1) étant relié à l'une des couronnes (HR1), le deuxième arbre (W12) du premier train planétaire (P1) étant relié à l'autre couronne (HR2), le troisième arbre (W13) du premier train planétaire (P1) étant relié au porte-satellites (PT) et le quatrième arbre (W14) du premier train planétaire (P1) étant relié à la roue planétaire (SR).

20. Transmission à variation continue à dérivation de puissance selon la revendication 19, **caractérisée en ce que** la première roue satellite (PR11) et la deuxième roue satellite (PR21) sont disposées de manière décalée l'une par rapport à l'autre dans la direction axiale et de préférence de manière rotative sur le porte-satellites (PT) sur le même diamètre et, comme les couronnes (HR1, HR2), présentent de préférence le même nombre de dents.

21. Transmission à variation continue à dérivation de puissance selon l'une des revendications 1 à 17, **caractérisée en ce que** le premier train planétaire (P1) comprend deux transmissions planétaire simples (PE1, PE2) présentant respectivement une couronne (HRE1, HRE2), présentant un porte-satellites (PTE1, PTE2) et des roues satellites (PRE1, PRE2) montées à rotation sur celui-ci et présentant une roue planétaire (SRE1, SRE2), le premier arbre (W11) du premier train planétaire (P1) étant relié au porte-satellites (PTE1) de la première transmission planétaire simple (PE1), le deuxième arbre (W12) du premier train planétaire (P1) étant relié à la roue planétaire (SRE1) de la première transmission planétaire simple (PE1) et à la couronne (HRE2) de la deuxième transmission planétaire simple (PE2), le troisième arbre (W13) du premier train planétaire (P1) étant relié au porte-satellites (PTE2) de la deuxième transmission planétaire simple (PE2) et le quatrième arbre (W14) du premier train planétaire (P1) étant relié à la roue planétaire (SRE2) de la deuxième transmission planétaire simple (PE2) et à la couronne (HRE1) de la première transmission planétaire simple (PE1).

22. Transmission à variation continue à dérivation de puissance selon la revendication 21, **caractérisée en ce que** la première transmission planétaire simple (PE1) est disposée radialement à l'intérieur de la deuxième transmission planétaire simple (PE2).

23. Transmission à variation continue à dérivation de puissance selon l'une des revendications 1 à 17, **caractérisée en ce que** le premier train planétaire (P1) comprend deux transmissions planétaire simples (PE1, PE2) présentant respectivement une couronne (HRE1, HRE2), présentant un porte-satellites (PTE1, PTE2) et des roues satellites (PRE1, PRE2) montées à rotation sur celui-ci et présentant une roue planétaire (SRE1, SRE2), le premier arbre (W11) du premier train planétaire (P1) étant relié au porte-satellites (PTE1) de la première transmission planétaire simple (PE1), le deuxième arbre (W12) du premier train planétaire (P1) étant relié à la couronne (HRE2) de la deuxième transmission planétaire simple (PE2), le troisième arbre (W13) du premier train planétaire (P1) étant relié au porte-satellites (PTE2) de la deuxième transmission planétaire simple (PE2) et à la couronne (HRE1) de la première transmission planétaire simple (PE1) et le quatrième arbre (W14) du premier train planétaire (P1) étant relié à la roue planétaire (SRE2) de la deuxième transmission planétaire simple (PE2) et à la roue planétaire (SRE1) de la première transmission planétaire simple (PE1).

24. Transmission à variation continue à dérivation de puissance selon l'une des revendications 1 à 17, **caractérisée en ce que** le premier train planétaire (P1) comprend un train de Ravigneaux, le premier arbre (W11) du premier train planétaire (P1) étant relié fonctionnellement à un porte-satellites (PT) du train de Ravigneaux, le deuxième arbre (W12) du premier train planétaire (P1) étant relié fonctionnellement à une roue planétaire (SR1) du train de Ravigneaux, le troisième arbre (W13) du premier train planétaire (P1) étant relié fonctionnellement à une couronne (HR) du train de Ravigneaux et le quatrième arbre (W14) du premier train planétaire (P1) étant relié fonctionnellement à une autre roue planétaire (SR2) du train de Ravigneaux, et la roue planétaire (SR1) étant réalisée avec un plus petit diamètre que l'autre roue planétaire (SR2).

25. Transmission à variation continue à dérivation de puissance selon l'une des revendications 1 à 17, **caractérisée en ce que** le premier train planétaire (P1) de la transmission à dérivation de puissance (3) présente un train planétaire comprenant deux couronnes (HR1, HR2), comprenant un porte-satellites (PT) et comprenant une roue planétaire (SR), plusieurs roues satellites (PR11, PR21) étant disposées à rotation sur le porte-satellites (PT) et une partie des roues satellites (PR11) étant réalisée avec une plus grande longueur axiale qu'une autre partie des roues satellites (PR21), les roues satellites (PR11) plus longues s'engrenant avec l'une des couronnes (HR2), la roue planétaire (SR) et les roues satellites (PR21) plus courtes, tandis que les roues satellites (PR21) plus courtes sont en prise avec l'autre couronne (HR1) et les roues satellites (PR11) plus longues et l'une des couronnes (HR2) est réalisée avec un plus petit diamètre que l'autre couronne (HR1) et est entourée radialement par la couronne (HR1) plus grande.

26. Transmission à variation continue à dérivation de puissance selon la revendication 25, **caractérisée en ce que** le premier arbre (W11) du premier train planétaire (P1) est accouplé au porte-satellites (PT), le deuxième arbre (W12) du premier train planétaire (P1) est accouplé à la roue planétaire (SR), le troisième arbre (W13) du premier train planétaire (P1) est accouplé à la couronne (HR1) plus grande et le quatrième arbre (W14) du premier train planétaire (P1) est accouplé à la couronne (HR2) plus petite.

27. Transmission à variation continue à dérivation de puissance selon l'une des revendications 1 à 26, **caractérisée en ce que** le deuxième train planétaire (P2) est réalisé sous la forme d'un train planétaire simple, le premier arbre (W21) du deuxième train planétaire (P2) étant réalisé sous forme de roue planétaire, le deuxième arbre (W22) du deuxième train planétaire (P2) étant réalisé sous forme de couronne et le troisième arbre (W23) du deuxième train planétaire (P2) étant réalisé sous forme de porte-satellites, des roues satellites (W24) étant montées à rotation sur le porte-satellites (W23) .
